# EUROPEAN PATENT SPECIFICATION

(11) **EP 0 856 649 B1**
(45) Date of publication and mention of the grant of the patent: **09.07.2003**
(21) Application number: 98101461.6
(22) Date of filing: 28.01.1998
(51) Int. Cl.: F02B 29/00

(54) **Four-cycle engine**
Viertaktbrennkraftmaschine
Moteur à quatre temps

(30) Priority: 31.01.1997 JP 1855297; 14.02.1997 JP 3085697
(43) Date of publication of application: 05.08.1998
(73) Proprietor: YAMAHA HATSUDOKI KABUSHIKI KAISHA, Iwata-shi Shizuoka-ken, 438 (JP)
(72) Inventor: Ito, Takeshi, Iwata-Shi, Shizuoka-ken (JP); Mori, Kenji, Iwata-Shi, Shizuoka-ken (JP); Hanajima, Toshiharu, Iwata-Shi, Shizuoka-ken (JP)
(74) Representative: Grünecker, Kinkeldey, Stockmair & Schwanhäusser Anwaltssozietät

(56) References cited:
- EP-A- 0 690 214
- DE-A- 2 448 933
- DE-A- 2 938 118
- FR-A- 2 709 789
- US-A- 4 512 311
- US-A- 4 622 931
- US-A- 5 063 899
- PATENT ABSTRACTS OF JAPAN vol. 008, no. 258 (M-340), 27 November 1984 & JP 59 131724 A (NIPPON DENSO KK), 28 July 1984
- PATENT ABSTRACTS OF JAPAN vol. 010, no. 109 (M-472), 23 April 1986 & JP 60 240822 A (MAZDA KK), 29 November 1985

## Description

### Field of Technology

The present invention relates to four-cycle engines; especially to improvements in their intake and exhaust systems which promote cleansing exhaust gases without lowering engine output.

### Prior Art

In the past, one means that has been used to achieve higher output in four-cycle engines is to set a high valve overlap interval, wherein both the exhaust valve(s) and air intake valve(s) are open (abbreviated below as "overlap"). This increases the air intake volume in the high speed operating range.

### Problems To Be Resolved by this Invention

However, when a high overlap interval is set in an engine, it is necessary to run the engine in rich state, wherein the air/fuel ratio is at a high concentration that is richer than the theoretical air/fuel ratio (λ = 1), in order to achieve stable engine operations, especially in the low speed operating range such as idling.

On the other hand, it is necessary to operate engines at the theoretical air/fuel ratio when cleaning the exhaust emissions with a three-element catalyst. Accordingly, in engines wherein the O₂ sensor provides feedback control for the theoretical air/fuel ratio and in cases in which exhaust-gas cleansing is also considered, since it would be necessary to have a broad range of stable operation at the theoretical air/fuel ratio, it is difficult to increase the foregoing overlap if a broad range of stable engine operation is to be achieved. The current state of affairs is such that it is difficult to achieve high output and efficient exhaust gas cleansing at the same time.

It is possible to use a variable valve timing apparatus to shrink the foregoing overlap in the foregoing low speed operating range and thereby achieve stable operations in the low speed operating range at the theoretical air/fuel ratio. However, adding this kind of variable valve timing apparatus complicates the engine structure, and makes it larger and more costly.

The state of the art contains various suggestions for obtaining stable engine idling conditions. US-4,512,311 discloses a four-cycle engine comprising a throttle valve arranged in the air intake passage. This throttle valve can be operated by means of a linkage system in conjunction with a main throttle valve so that the throttle valves of the four-cycle engine are substantially in a closed position when the main throttle valve is in its closed or idled position. This prevents exhaust gases to flow back into the air intake passage at low speeds when both, the intake and exhaust valves are open at the same time.

US-4,622,931 discloses a manifold through which air enters the engine, said manifold has long inlet tracts being equipped with valves at the downstream end of the tracts to control the air flow closed to a cylinder head of the four-cycle engine. For bypassing those valves, there is provided a bypass passage allowing sufficient air to enter the cylinder head for engine idle. With this measure, the backflow of exhaust gases into the air intake passage during engine idling can be prevented.

Patent Abstract of Japan Vol. 008, No. 258 of November 27, 1994 (JP-59131724A) discloses a variable volume surge tank provided between a throttle valve and the air-inlet valve of a four-cycle engine. The volume of the surge tank is reduced in case of a negative pressure within said tank. The reduction of the volume of the surge tank is achieved by a piston arranged within the surge tank which is provided with biasing means holding the piston close to the wall of the surge tank and allowing movement of the piston for reduction of the volume of the surge tank away from the outer periphery of the surge tank in case of negative pressure within the surge tank.

Finally, US-5,063,899 discloses an air intake system for a multi-cylinder four-cycle combustion engine. The air intake system has an intake manifold providing separate intake passages for each cylinder, each passage being equipped with a throttle valve. Downstream of the throttle valve and near the intake port of each cylinder there is provided an outlet of a bypass passage, which branches of from a central air intake duct upstream of a main throttle valve being arranged upstream of the intake manifold. A controller controls intake air actually introduced into the cylinder by actuating the throttle valves to throttle down smaller than the main throttle valve in a light engine load range.

The present invention aims to provide a four-cycle engine allowing stable operations at theoretical air-fuel ratio resulting in improving the engines' output.

The inventive solution to the above-mentioned problem is identified in independent apparatus claim 1. Preferred embodiments of the present invention are set out in the dependent claims.

### Effects of the Invention

Since the ratio between the overlap interval and the volume ratio is set to maintain a constant relationship, wherein the volume ratio is set on the basis of the overlap interval, or wherein the overlap interval is set on the basis of the volume ratio, even in cases when, for example, the overlap interval has been widened to improve engine output by the appropriate setting of the volume ratio, it is possible to allow stable engine idling. By adjusting the volume ratio on the basis of the overlap interval, stable engine idling can be achieved using an air/fuel ratio range from a little rich to a lean limit. The inventive design of the four-cycle engine is particularly suitable for achieving stable engine idling at a lean limit air/fuel ratio. In particular, stable engine idling at a lean limit air/fuel ratio that is leaner than the theoretical ratio can be achieved by setting the volume ratio on the basis of the overlap interval. Therefore, stable engine operations are effectively made possible at the theoretical air/fuel ratio and the engine output is improved while efficient exhaust cleansing with a three-element catalyst is provided.

According to the invention, the volume ratio of the port volume to the stroke volume to 0.25 to 0.45, so that even when, for example, a high overlap interval has been set to improve engine output, it is possible to reduce the EGR rate and operate at the lean limit air/fuel ratio, which is on the lean side of the theoretical air/fuel ratio. This design allows stable operations at the theoretical air/fuel ratio, resulting in improving the engine's output while realizing efficient exhaust gas cleansing by the three element catalyst.

The setting of the foregoing volume ratio to 0.25 to 0.45, as specified in a preferred embodiment of the present invention involves the setting of the overlap interval to a crank angle within a range of 30 to 140°. This makes it possible to set a lean limit air/fuel ratio that is leaner than the theoretical air/fuel ratio, which facilitates the cleansing of the exhaust gases by the three-element catalyst.

According to a preferred embodiment, the engine is equipped with a variable port volume apparatus that varies the foregoing volume ratio according to the operating state of the engine. This makes it possible, for example, to minimize the volume ratio and to operate at a high auto-EGR rate while achieving stable idling with the lean-limit air/fuel ratio being richer than the theoretical air/fuel ratio. This volume ratio can then be increased with increasing engine RPM and engine load, so that the volume ratio can be set based upon the operating state of the engine. By extension it is thereby possible to achieve the lean limit air/fuel ratio and to improve the engine output while assuring the cleansing of the exhaust gases.

According to a preferred embodiment, the engine is equipped with a variable valve timing apparatus that varies the foregoing overlap interval based upon the operating state of the engine. This makes it possible to minimize the overlap when the engine is idling in order to assure running on the lean side of the foregoing lean limit air/fuel ratio.

Further, the fuel injection valves are located on the upstream side of the throttle valve in each of the air intake passages, so even in cases where the throttle valve has been positioned in close proximity to the air intake valve opening in order to achieve a small volume ratio, it is still possible to obtain the amount of clearance needed for positioning the fuel injection valve. Incidentally, if one were to try to locate the fuel injection valve downstream of the throttle valve as in conventional engines, it would increase the foregoing port volume, and make it difficult to achieve the foregoing volume ratio.

According to a preferred embodiment of the invention, since the throttle valve is positioned in a manner such that majority of the downstream surface of the throttle valve, when in its minimum aperture position inside the air intake passage, lies within the projected surface of said engine in the cylindrical axis direction, it is easier to achieve the afore-mentioned volume ratio than it was in the prior art. "Projected surface" is the overall projected surface of the engine, preferably the cylinder head.

According to a preferred embodiment of the invention, since the rotating shafts of the foregoing throttle valves are positioned to approximately conform to the foregoing downstream surfaces, wherein the throttle drive shafts run parallel to the foregoing throttle valve's rotating shafts and are spaced in-between, and wherein said throttle drive shafts and the throttle valve's rotating shafts are connected by means of a linkage apparatus, it is easy to achieve a specific structure for the throttle drive shaft which does not interfere with the engine.

According to a preferred embodiment of the invention, since the foregoing downstream surface is positioned apart from and downstream of the foregoing throttle valve's rotating shaft, and the throttle drive shaft is positioned along the same straight line as the foregoing throttle valve's rotating shaft, it is easy to achieve a specific structure for the throttle drive shaft which does not interfere with the engine.

According to a preferred embodiment of the invention, since a throttle aperture sensor is mounted on the foregoing throttle valve's rotating shaft to detect the aperture of said throttle valve, it is possible to directly detect the throttle valve aperture without any error being introduced by indirect detection through a linkage mechanism, etc.

Further, since a stop is formed on the rotating shaft at the throttle valve's minimum aperture, it is possible to precisely set the minimum aperture, which is important for idling adjustment by the throttle valve. In addition, forming a throttle valve fully open stop on the throttle valve's rotating shaft prevents damage to the throttle valve from over-rotation, even if the operator applies a great deal of force to open the throttle.

According to a preferred embodiment of the invention, when the engine is equipped with a side cam chain dynamic valve apparatus, by locating the throttle aperture sensor on the side opposite the cam chain and the foregoing throttle drive shaft on the cam chain side, with a throttle valve rotating shaft and separate drive shaft, said throttle drive shaft with the throttle aperture sensor and other parts can be used to detect the throttle aperture with high accuracy using this left and right balanced mounting.

According to a preferred embodiment of the invention, when the engine is equipped with a center chain dynamic valve system, when using a throttle valve rotating shaft that is separate from the drive shaft, it is possible to position said rotating shaft approximately midway along its length to achieve a well balanced transmission of rotational drive from said drive shaft to the various throttle valves and to better synchronise the opening and closing of the various throttle valves.

According to a preferred embodiment of the invention, since an idle air adjustment passage is formed in the ceiling of each air intake passage to bypass the foregoing throttle valve, the fuel injected by the foregoing fuel injection valve is prevented from invading the idle air adjustment passage, thereby facilitating more stable idling.

According to a preferred embodiment of the invention, since the fuel sprayed from each fuel injection valve strikes the fully open throttle valve, a good air/fuel mixture can be achieved.

According to another aspect of the invention, detections are carried out that allow discriminating between extreme operations under no load conditions (no load engine racing), and extreme operations under load (fast acceleration), and because the fuel injection conditions are adjusted so as to differ between the extreme operations under no load and extreme operations under load, it is possible to exercise control even under the special condition of extreme operations under no load conditions, and to prevent excessive throttle sensitivity due to the large air intake volume, as well as to prevent wide variations in the amount of fuel adhering to or vaporizing from the inside surface of the air intake passage, and thereby prevent the loss of ignition during no load racing and avoiding the loss of operational feel of the engine.

### A Brief Explanation of the Figures

**Figure 1** is a partial sectional side view of a four-cycle engine embodiment of this invention for mounting on a motorcycle.
**Figure 2** is a sectional side view of the air intake port area of the foregoing engine.
**Figure 3** is a sectional view along line III-III of Figure 2.
**Figure 4** is a total component drawing of the foregoing engine.
**Figure 5** is a graph to explain the operating effects of the foregoing engine in terms of the valve overlap OIL and the lean limit air/fuel ratio.
**Figure 6** is a graph to explain the operating effects of the foregoing engine in terms of the port volume/stroke volume ratio and the lean limit air/fuel ratio.
**Figure 7** is a graph to explain the operating effects of the foregoing engine in terms of the port volume/stroke volume ratio and the valve overlap OIL.
**Figure 8** is a graph to explain the foregoing engine operating effects in terms of the volume ratio and EGR rate.
**Figure 9** is a graph to explain the foregoing engine operating effects in terms of the volume ratio and the EGR rate.
**Figure 10** is a sectional side view of a modified embodiment showing the foregoing throttle valve, structure of the fuel injection valve, and their positions.
**Figure 11** is a sectional side view of a modified embodiment showing the foregoing throttle valve, structure of the fuel injection valve, and their positions.
**Figure 12** is a sectional side view of a modified embodiment showing the foregoing throttle valve, structure of the fuel injection valve, and their positions.
**Figure 13** is a sectional side view of a modified embodiment showing the foregoing throttle valve, structure of the fuel injection valve, and their positions.
**Figure 14** is a sectional side view of a modified embodiment showing the foregoing throttle valve, structure of the fuel injection valve, and their positions.
**Figure 15** is a left side view of a first embodiment of this invention's four-cycle engine mounted on a motorcycle.
**Figure 16** is a sectional right side view of the air intake port area of the foregoing engine.
**Figure 17** is a sectional view along line III-III of Figure 16.
**Figure 18** is a top view of the engine with the head cover removed.
**Figure 19** is a view of the throttle body of the foregoing engine along arrow V of Figure 16.
**Figure 20** is a sectional view along line VI-VI of Figure 19.
**Figure 21** is a block diagram of the operation control unit of the foregoing engine.
**Figure 22** is a sectional right side view of the air intake port area of a second embodiment of the four-cycle engine according to this invention.
**Figure 23** is a top view of the foregoing engine with the head cover removed.
**Figure 24** is a sectional back view of the throttle valve area of the foregoing engine.
**Figure 25** is a sectional side view of a third embodiment of an engine according to this invention.
**Figure 26** is a left side view of a fourth embodiment of an engine according to this invention.
**Figure 27** is a left side sectional view of the foregoing engine.
**Figure 28** is a sectional view along line XIV-XIV of Figure 27.
**Figure 29** is a top view of the throttle body of the foregoing engine.
**Figure 30** is a sectional view along line XVI-XVI of Figure 28.

### Embodiment

Embodiments of the present inventions will be described with reference to the attached figures.

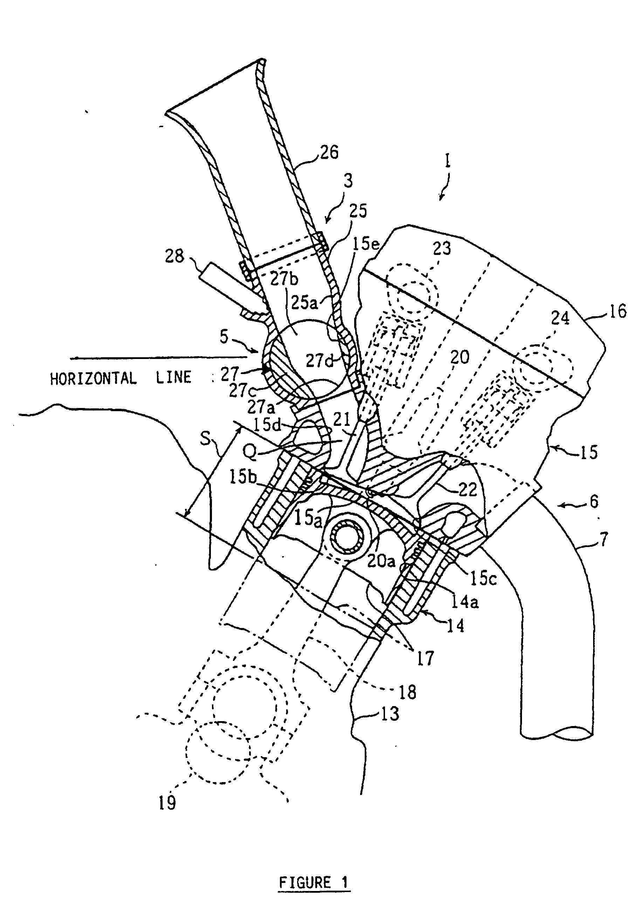

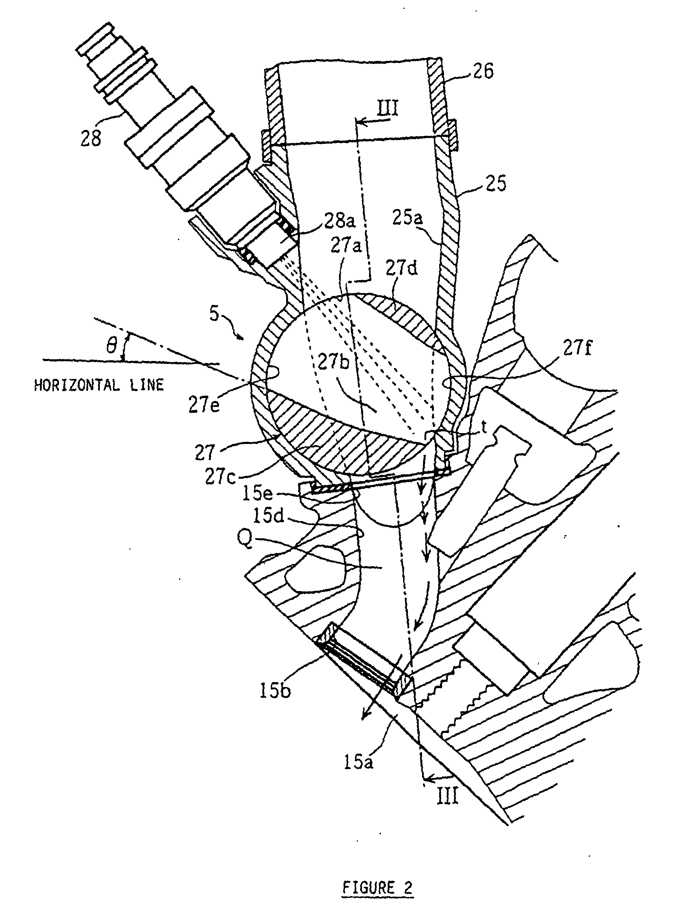

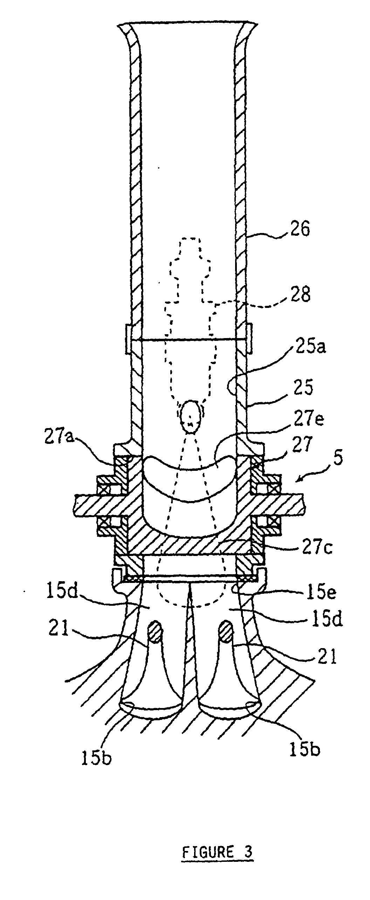

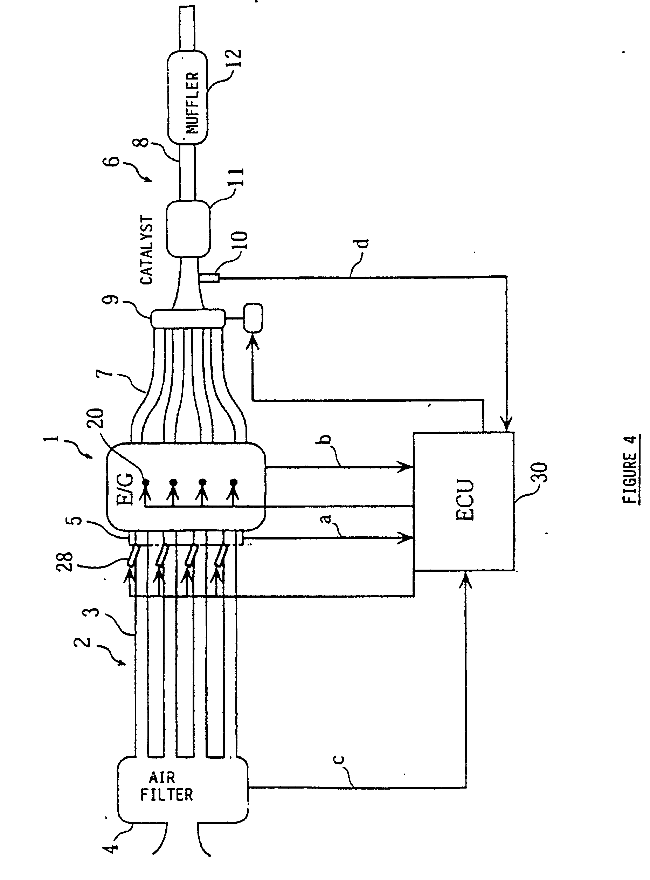

Figures 1 through 9 relate to an embodiment of a four-cycle engine according to this invention; Figure 1 is a partial side sectional view of said engine; Figure 2 is sectional side view of the throttle valve area; Figure 3 is a top view of the throttle valve, and Figures 4 through 9 are graphs that will be used to explain the operational effects.

In the figures 1 to 14, 1 presents a water-cooled, four-cycle, in-line, 4 cylinder, 4 valve engine for use on motorcycles. Said engine 1 is mounted in a manner such that its crankshaft is disposed horizontally in the transverse direction with respect to the motorcycle frame and such that its cylindrical axis tilts forward. The air intake system 2 of said engine is composed of air intake passages 3 and an air filter 4. A throttle valve 5, that will be described below, is mounted in said air intake passage 3. The exhaust system 6 is composed of an exhaust manifold 7 and exhaust pipe 8; an exhaust control valve 9, which can variably control the cross section of the exhaust passage, is mounted in the confluence area of the exhaust manifold 7. 10 is an O₂ sensor, 11 is a catalyst, and 12 is a muffler (Fig. 4).

In the engine 1, the overall structure is such that the cylinder body 14 is unitized with the front of crankcase 13, which contains a gear apparatus; a cylinder head 15, with a head cover 16 fastened on top, is mounted on said cylinder body 14. Pistons 17 are slidably inserted into the cylinder bores 14a of the foregoing cylinder body 14, and said pistons 17 are linked by connecting rods 18 to the crankshaft 19.

There are four combustion chamber cavities 15a formed in the cylinder head 15 on the surface that adjoins the cylinder body 14. The electrodes 20a of spark plugs 20 lie adjacent to the inside center surfaces of the combustion chamber cavities 15a.

There are two air intake openings 15b and two exhaust openings 15c that open into the foregoing combustion chamber cavities 15a for each cylinder. An air intake valve 21 is mounted in the air intake openings 15b of each cylinder, while an exhaust valve 22 is mounted in each exhaust opening 15c; these are respectively biased toward the normally-closed position. The air intake valves 21 and the exhaust valves 22 are driven open and closed by an air intake camshaft 23 and an exhaust camshaft 24.

The air intake passage 3 of the foregoing air intake system 2 comprises two air intake ports 15d which connect to the foregoing air intake openings 15b in the foregoing cylinder head, a throttle body 25 which connects at the confluence of said two air intake ports (their external connection opening), and the foregoing air filter 4, which connects to said throttle body and which is equipped with an opening to the air intake pipe 2.

The foregoing throttle valve 5 is mounted in the foregoing throttle body 25. The axial line of the valve hole 27a formed in this throttle body 25 runs parallel to the foregoing camshaft 23. A valve body 27 comprising a round rod is rotatably inserted in said throttle hole 27a. A passage opening 27b formed in said valve body 27 has the same shape as the inside shape of the air intake passage 25a inside the throttle body 27, to enable the connection to the air intake port 15d in the cylinder head 15.

The foregoing valve body 27 has a fully open position wherein the bottom 27c and the ceiling area 27d of the passage opening 27b extend into the inside of the bottom concave area 27e formed in the top wall of the air intake passage 25a in a manner such they form a contiguous surface with the inside surface of the air intake passage 25a; and an almost fully closed position wherein the bottom 27c projects inside of the air intake passage. The aperture is controlled according to the accelerator operation by the operator. Also, when the bottom 27c projects inside the air intake passage to close off said passage, the foregoing ceiling area 27d also projects into the air intake passage.

A fuel injection valve 28 is also mounted in the throttle body 25. The fuel is injected from the nozzle 28a of the fuel injection valve toward the gap area *t* that lies between the ceiling wall surface of the air intake passage 25a and the bottom 27c of the valve body 27 when in its fully closed position.

When the foregoing valve body 27 is rotated to its fully closed position, the inside surface of the bottom area 27c (the constituent surface of the air intake passage) is tilted downward by the angle θ from the horizontal line when the engine is mounted. This prevents fuel from pooling up in the bottom area 27c, even when the valve body 27 is fully closed and fuel is being injected by the fuel injection valve 28.

In the present embodiment, when mounting the throttle valve 5, the valve body 27 is positioned so that the volume ratio ε and the valve overlap O/L, when both the air intake valve 21 and the exhaust valve 22 are open, can be set to achieve the thinnest (lowest concentration) air/fuel ratio (lean limit air/fuel ratio) Max AIF.

Here, what is meant by the volume ratio ε is the ratio Q/V where Q is the port volume per cylinder, defined as the volume from the top surfaces of the umbrella area of the air intake valves in the air intake valve openings 15b of the two air intake ports 15d to the outside surface area of the bottom area 27c when in its fully closed position, and V is the exhaust volume per cylinder which is the stroke volume obtained by multiplying the cross sectional area of the cylinder bore 14a by the stroke length S.

In this case, for example, the O/L is set based upon the required engine output, and then at said O/L, ε can be set to be leaner than the theoretical air/fuel ratio at the foregoing MaxA/F. The position of the valve body 27 is then set on the basis of the ε and the stroke volume V per cylinder.

Also, the overlap OIL has been set to 50° and the volume ratio ε has been set at 0.25 in the present embodiment.

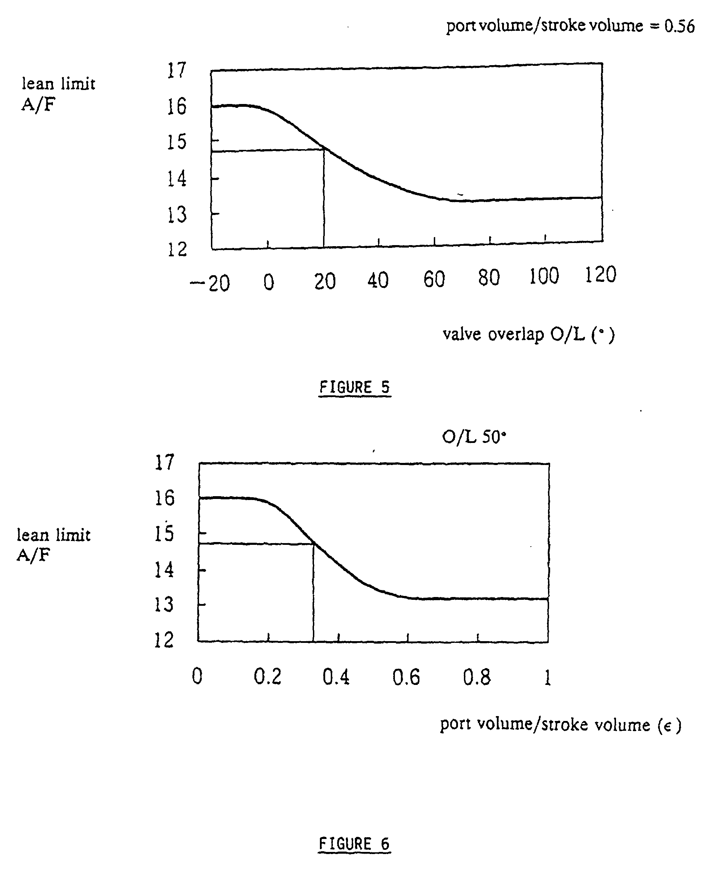

Figure 5 shows the relationship between the valve overlap OIL and the lean limit air/fuel ratio MaxA/F when the volume ratio ε (port volume/stroke volume ratio) is 0.56. That same figure shows that as the O/L increases, the MaxA/F becomes richer. For example, when the OIL is 20°, the Max A/F becomes approximately the theoretical air/fuel ratio (A/F = 14.7); when the O/L is greater than 20°, the MaxA/F is richer than the theoretical air/fuel ratio.

Figure 6 shows the relationship between the volume ratio (port volume/stroke volume ratio) ε and the lean limit air/fuel ratio MaxA/F when the valve overlap OIL is 50°. That same figure also shows that the larger the foregoing ε, in other words, the larger the port volume, the richer the MaxA/F. For example, when ε is 0.35 or greater, the MaxA/F is richer than the theoretical air/fuel ratio.

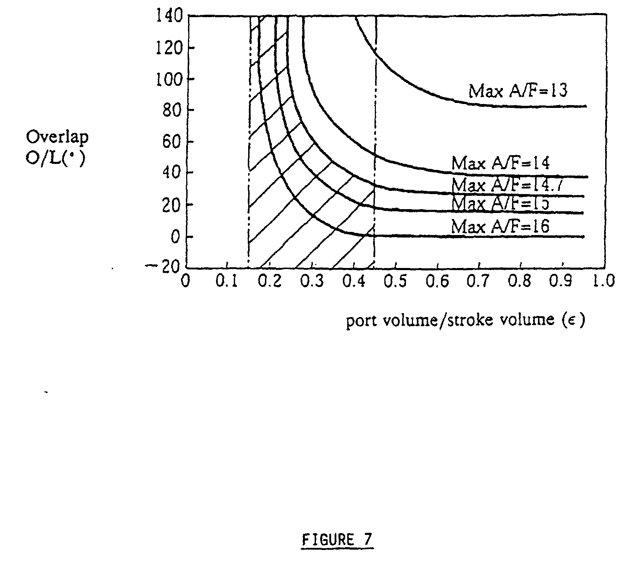

Figure 7 shows the relationship between the volume ratio (port volume/stroke volume ratio) ε per each lean limit air/fuel ratio MaxA/F and the valve overlap OIL. That same figure shows that when the foregoing ε is set to be 0.45 or under, while setting the OIL to a relatively high value, the MaxA/F can be leaner than the theoretical air/fuel ratio. More desirably, in the range on the left side of the MaxA/F = 14.7 line (shaded area), the port volume/stroke volume ratio ε shall be selected based upon the required valve overlap OIL. The structure of the throttle valve 5 in the present embodiment prevents the setting of ε to less than 0.25 because adequate positioning space cannot be obtained.

The engine 1 of the present embodiment is also equipped with an ECU 30 that controls the amount of fuel injected and the ignition timing based upon the operating state of the engine. Said ECU 30 receives a variety of input signals including the throttle aperture signal a, the RPM signal b, the intake air temperature signal c and the air/fuel ratio signal d. The ECU 30 then determines the standard amount of fuel injection based upon the throttle aperture signal a and the RPM signal b, corrects the air/fuel ratio to the theoretical air/fuel ratio, and performs feedback control on the amount of fuel injected from the fuel injection valve 28 to achieve the theoretical air/fuel ratio.

When the engine 1 of this embodiment is idling, the valve body 27 of the throttle valve 5 is held in the fully closed position as shown by the solid lines in Figures 1 and 2. Accordingly, the volume ratio ε in the idling state is 0.25. Further, since the valve overlap OIL is 50°, as was described above, it is clear from Figure 7 that the lean limit air/fuel ratio MaxA/F for this embodiment is about 15, which is leaner than the theoretical air/fuel ratio. Accordingly, the engine 1 of this embodiment can be stably idled at the theoretical air/fuel ratio.

Here, in the idling operating range, there is but little air intake volume, which accounts for the slow flow speed of the air entering the combustion chamber that makes it difficult to achieve good combustion. In this embodiment, however, the intake air is diverted by the bottom area 27c of the valve body to flow through the gap *t* and along the ceiling wall surface in the axial direction of the cylinder bore so as to create a relatively high speed entry into the cylinder bore in the perpendicular direction. This generates the so-called tumbling action that enables good combustion.

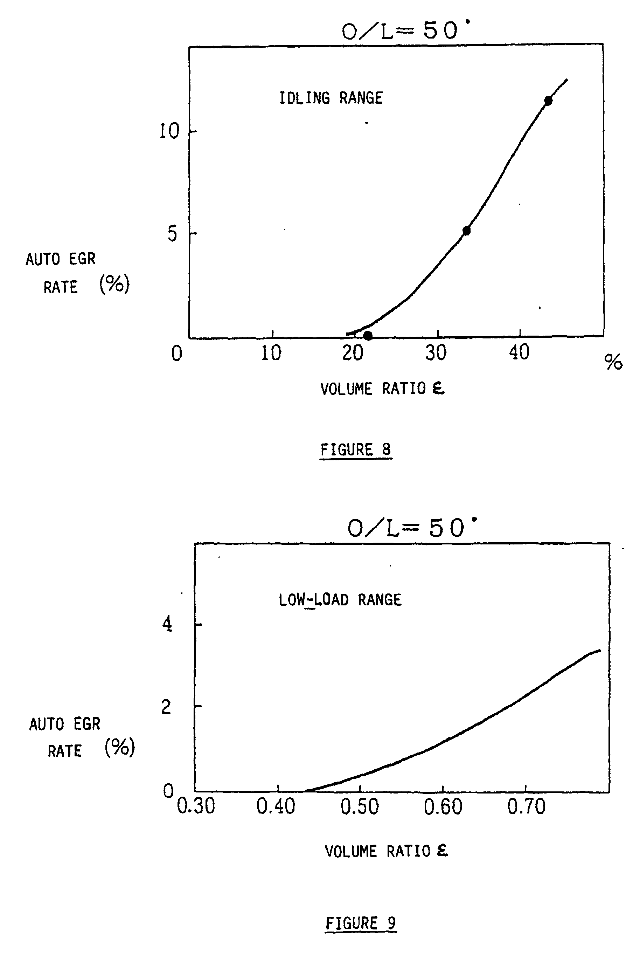

Figure 8 shows experimental results for the relationship between the volume ratio at the low load operating range and the auto-EGR rate when the valve overlap OIL is 50°. It is apparent from the Figure that in the low load operating range where the throttle valve has been opened after operating in the idling range, even if the volume ratio rises above 0.45, the auto-EGR rate remains at 4% or under, which makes stable operations possible.

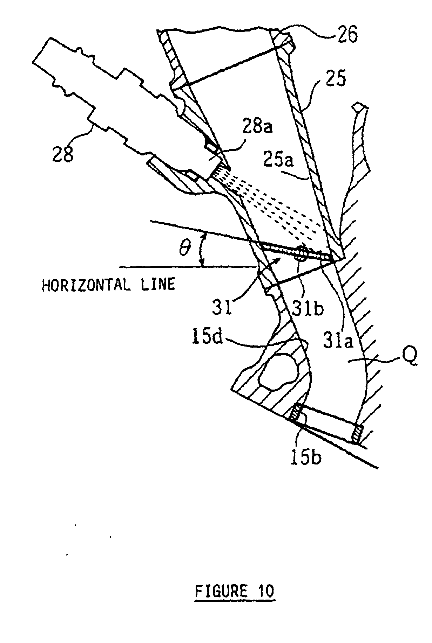

In the foregoing embodiment, the throttle valve was described as a round rod mounted in the air intake passage opening, but the throttle valve may assume any of the structures shown in Figures 10 through 12. In these cases, the positioning of the throttle valve 31 should be such that the volume ratio ε (the volume Q from the air intake valve of the air intake port 15d to the throttle valve 31/stroke volume V) could be set in a range from 0.25 to 0.45.

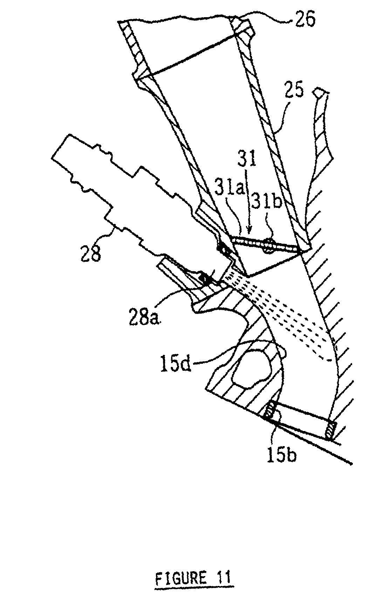

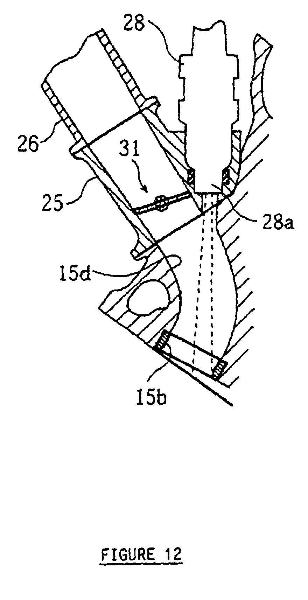

It is possible to adopt any of a number of schemes for the positioning of the fuel injection valve 28 and the injection position. Figure 10 shows the case where the fuel injection valve 28 is mounted upstream of the throttle valve 31, and the fuel is injected through the gap between said throttle valve 31 and the ceiling surface of the air intake passage. Figure 11 shows the fuel injection valve 28 located downstream of the throttle valve 31, and injecting fuel toward the ceiling surface of the air intake port 15d. Figure 12 shows the fuel injection valve located in close proximity to the throttle valve 31 on the ceiling side of the air intake passage, and injecting fuel toward the top umbrella surface of the air intake valve 21.

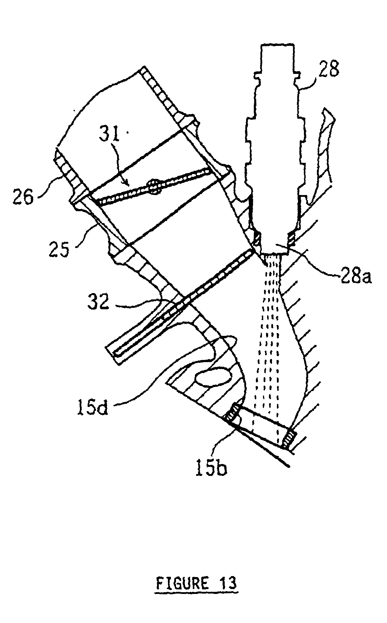

Figure 13 shows the positioning of a slide valve 32 downstream from the throttle valve 31, with the fuel injection valve 28 being mounted in close proximity to the slide valve in the ceiling side of the air intake passage and the fuel being injected toward the top umbrella surface of the intake valve 21.

The example shown in Figure 13 essentially makes it possible to vary the volume ratio ε. To wit, when the slide valve 32 is fully closed, the volume between the slide valve 32 of air intake port 15d and the air intake valve 21 becomes the port volume Q, and the foregoing volume ratio ε is at its minimum value. On the other hand, if the slide valve 32 is fully opened, the volume between the throttle valve 31 of the air intake port 15d and the air intake valve 21 becomes the port volume Q. Accordingly, the foregoing volume ratio ε is at its maximum. At intermediate apertures for the slide valve 32, the volume ratio ε is at an intermediate value between the foregoing minimum and maximum values.

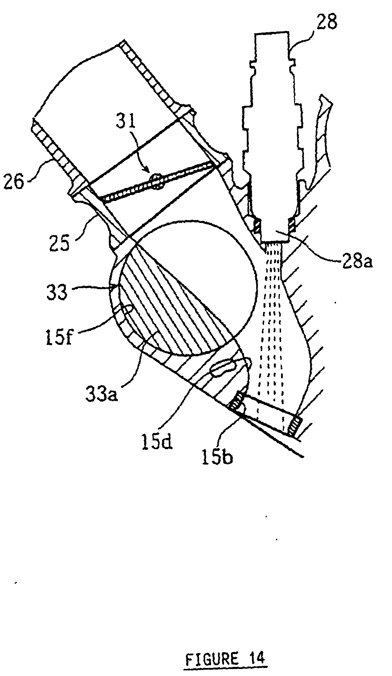

Figure 14 shows another example of a variable volume ratio ε. In this example, a variable volume valve 33 made of a round rod is rotatably inserted through the air intake port 15d in the camshaft direction. This variable volume area 33a in the variable volume valve 33 was fabricated by notching the round rod in a manner such that the notch shape was the same as the shape of the inner surface of the air intake passage. Said variable area 33a was buried in the bottom wall of the intake port 15d, and the rotation of the valve allowed a maximum amount of air flow when the notch was aligned with the passage, and a minimum amount of air flow when it was rotated to project into the air intake passage.

When the variable volume valve 33 was rotated to project the variable area 33a into the air intake passage, the port volume is reduced by an amount corresponding to the variable area 33a, and accordingly, the foregoing volume ratio ε would be at its minimum value. On the other hand, when the variable valve 33 was rotated so that the variable valve area 33a was buried in the concave 15f, the port volume was at its maximum, as was the foregoing volume ratio ε. At intermediate rotational angles for the variable volume valve 33, the volume ratio ε would have a value between the foregoing minimum and maximum values.

Further, by equipping the foregoing air intake valves 21 and exhaust valves 22 with a variable valve timing apparatus, it becomes possible to set the air/fuel ratio to the lean side of the foregoing lean limit air/fuel ratio, which further stabilises the idling operations at the theoretical air/fuel ratio.

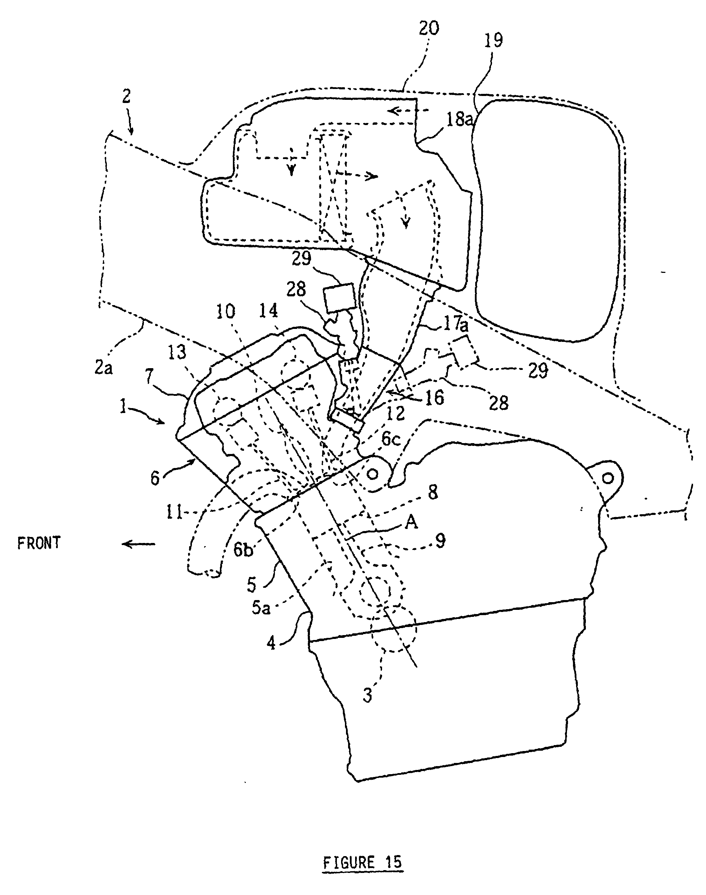

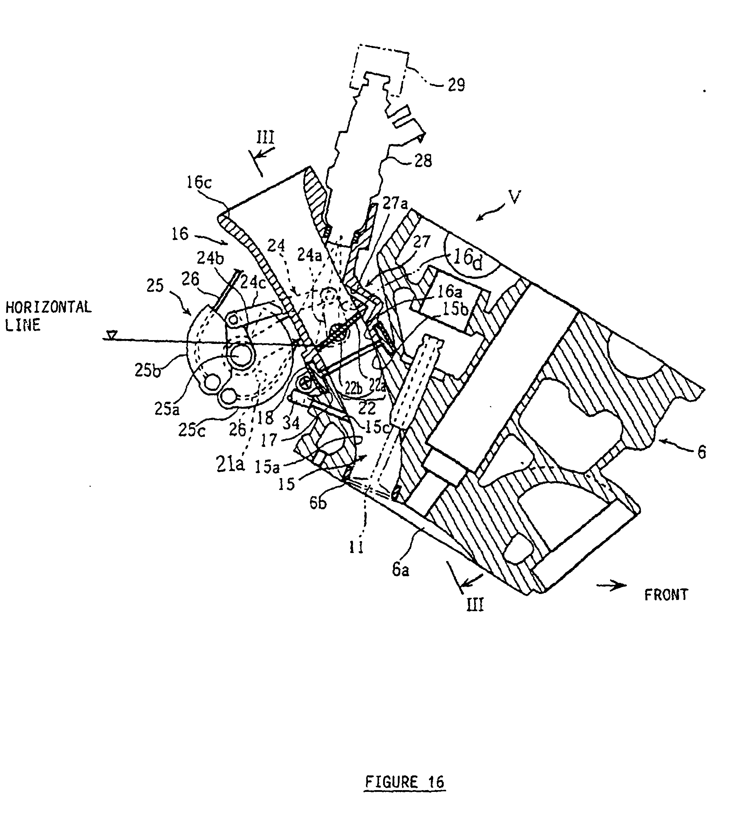

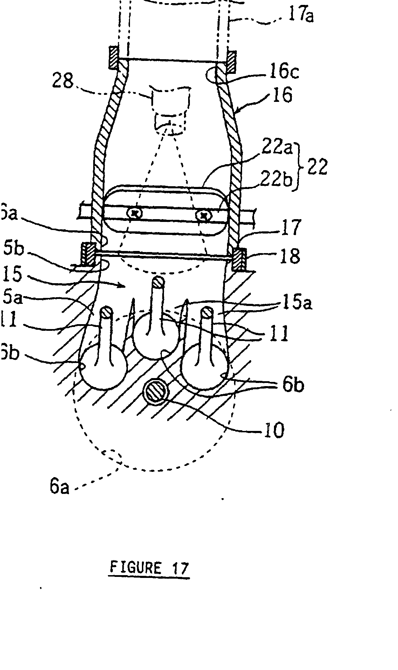

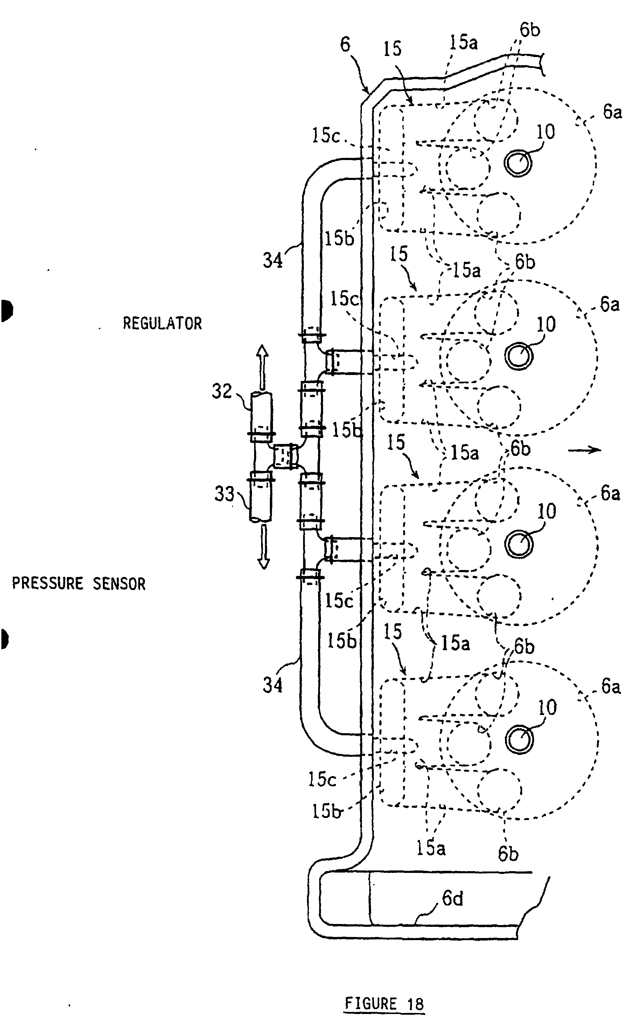

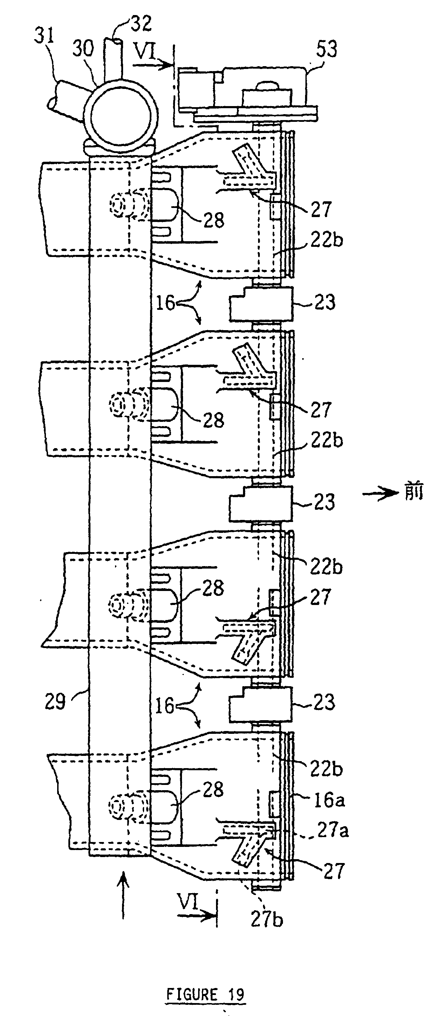

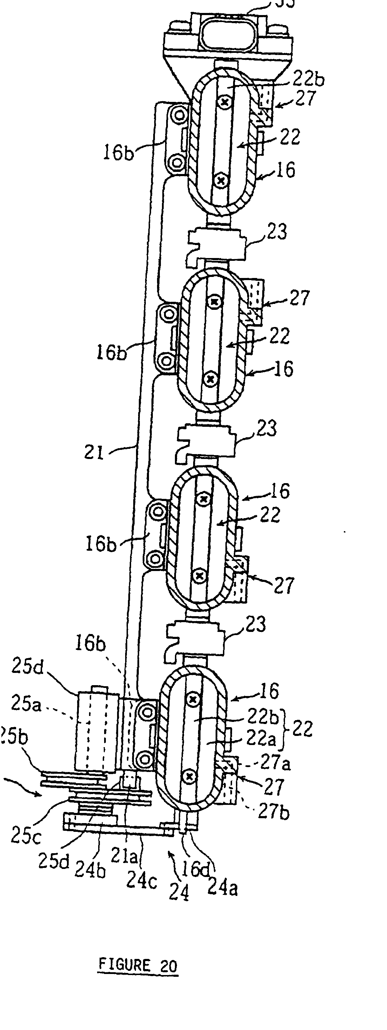

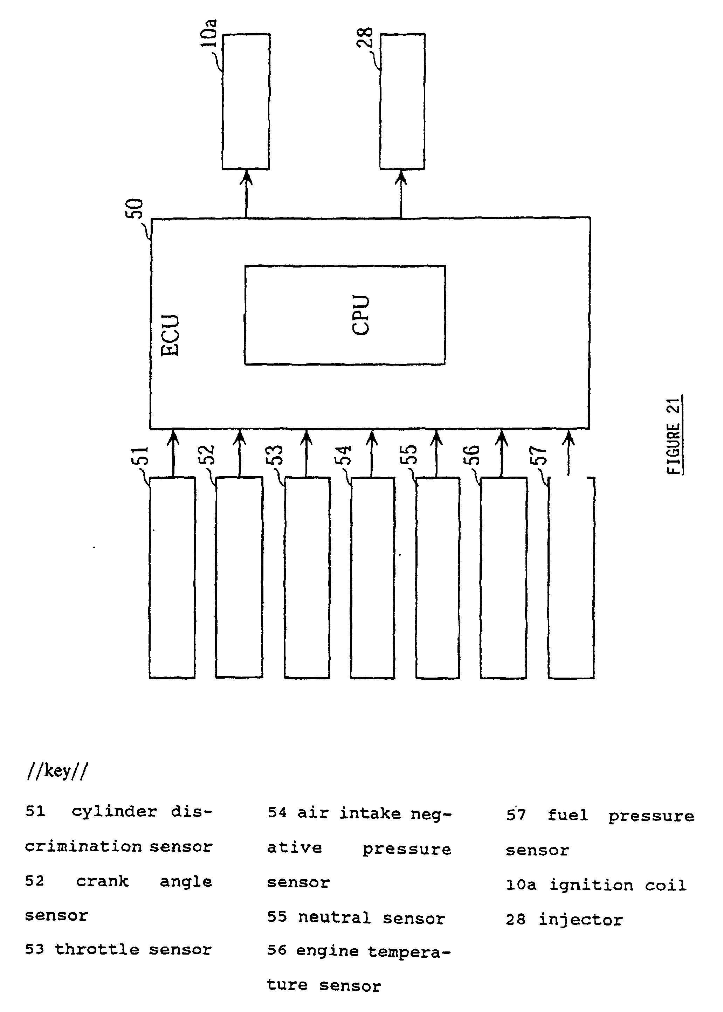

Figures 15 through 21 will be used to explain a first embodiment of a four-cycle engine according to this invention. Figure 15 is a left side view of the engine mounted in a vehicle; Figure 16 is a right side sectional view of said engine; Figure 17 is a sectional view along line III-III of Figure 16; Figure 18 is a top structure view with the head cover removed; Figure 19 is a view in the direction of arrow V in Figure 16, Figure 20 is a sectional view along line VI-VI of Figure 19; Figure 21 is a block diagram of the engine's operating control unit. In this embodiment, references to front and back, left and right shall be based upon a person seated in the drivers seat.

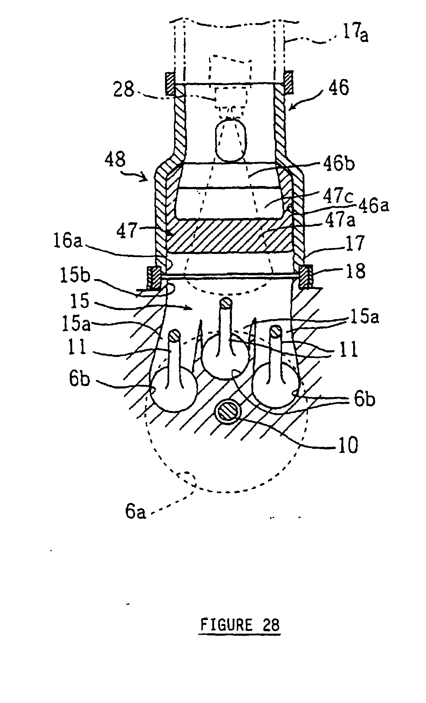

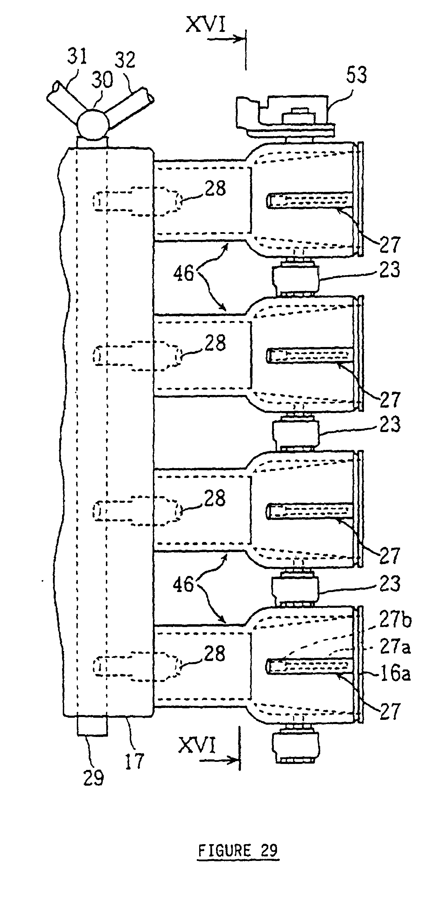

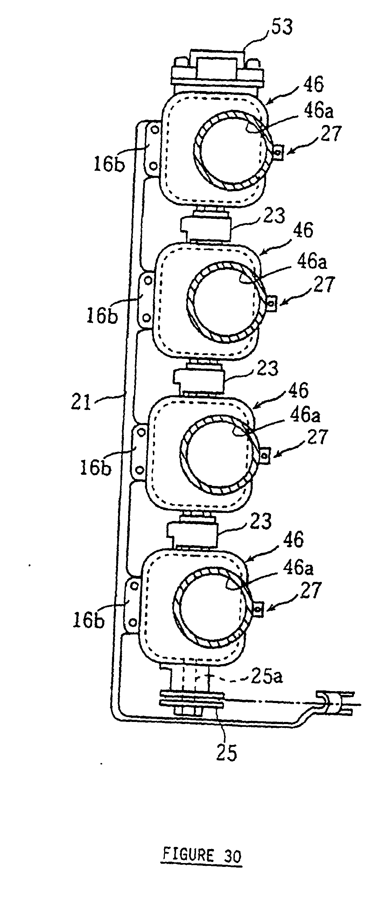

In the Figures 15-30, 1 is a four cycle, in-line four cylinder, five valve, water cooled engine for a motorcycle. The crankshaft 3 of said engine 1, when mounted in the motorcycle frame, is disposed horizontally in the transverse direction, and the cylinder axis A tilts forward. A cylinder body 5 is integrally formed in the front of the crankcase 4, which houses a gear apparatus. A cylinder head 6 and head cover 7 are fastened atop the cylinder body 5, while pistons 8 are slidably inserted into the cylinder bores 5a of the cylinder body 5. Connecting rods 9 link said pistons 8 to the foregoing crankshaft 3.

Further, four concave combustion chambers 6a are formed in the surface of the foregoing cylinder head 7 that mates with the cylinder body, and the electrodes from spark plugs 6 border the inside surfaces at the center of the respective combustion chamber concaves 6a.

Further, three air intake valve openings 6b and two exhaust valve openings 6c are formed in the foregoing concave combustion chambers 6a for each cylinder. Air intake valves 11 and exhaust valves 12 are installed in the respective air intake valve openings 6b and exhaust valve openings 6c, and are biased, respectively, in the normally closed position. The air intake camshaft 13 and the exhaust camshaft 14 drive the respective air intake valves 11 and exhaust valves 12 open and closed.

The engine 1 of the present embodiment has a side-chain dynamic valve mechanism. The foregoing air intake camshaft 13 and exhaust camshaft 14 are rotatably driven by the foregoing crankshaft 3 by means of a timing chain located inside the chain chamber 6d formed on the right side of the engine.

The air intake system for the foregoing engine 1 includes air intake ports 15 which pass through the rear wall side of the cylinder head 6 to the foregoing air intake valve openings 6b for each of the cylinders. The external connection openings 15b of said air intake ports 15 are connected to throttle bodies 16 and connected to said throttle bodies 16 are air intake ducts 17a that open inside an air cleaner housing 18a. Overall, the foregoing air intake ports 15, throttle bodies 16 and air intake duct 17a are configured approximately linearly, and are respectively positioned perpendicularly in order to reduce air intake resistance to the greatest extent possible. The foregoing throttle bodies 16 are integral units that consist of an area that houses the throttle valve and an injection body, which holds a fuel injection valve, but it would also be possible to fabricate these parts separately and join them together.

The foregoing air cleaner housing 18a is mounted between a left-right pair of tank rails 2a, 2b on the vehicle frame 2, and the fuel tank 19 is mounted rearward of said air cleaner housing 18a. Said fuel tank 19 and the foregoing air cleaner housing 18a are covered by the tank cover 20.

The foregoing air intake ports 15 are composed of three branches 15a that connect to the foregoing air intake openings 6b, and the foregoing external connection opening 15b forms a long, oblong shaped confluence for the three branch ports 15a that protrude slightly in a cylindrical shape.

The foregoing throttle bodies 16 evince a connection boss area 16a on their downstream sides that is formed to the same oblong shape as the foregoing exhaust ports 15, and that oblong shape gradually assumes an approximate true circular shape toward the upstream connection boss area 16c. The approximately circular upstream side connection boss area 16c connects with the foregoing air intake duct 17a by means of a rubber joint.

The upstream ends of rubber joints 17 are connected to the foregoing downstream side connection bosses 16a of the foregoing throttle bodies 16, and the downstream ends of said joints 17 are connected onto cylindrical shaped external connection openings 15b of the foregoing air intake ports 15. Said joints 17 are held in place on the cylinder head 6 by metallic bands 18.

The four throttle bodies 16, one per each cylinder, are joined to and unitized with a connecting bracket 21 at their connecting flange 16b by means of a bolt attachment.

Further, each of the foregoing throttle bodies 16 holds a throttle valve 22 near the downstream side connection boss 16a. Each of the throttle valves 22 consists of a valve plate 22a having the above described oblong shape, and which is bolted to a valve shaft 22b. The full closure angle for said valve plate 22a is set to tilt it slightly toward the downstream side from the perpendicular, in other words, rotated counterclockwise to an angle of 10-15°. During idling operations the angle (minimum aperture) would be such that the throttle plates would be rotated counterclockwise an additional 0.1 to 3° from their fully closed position (10.1 to 18° from the perpendicular).

A throttle sensor 53 that detects the aperture of the throttle valves is mounted on the left side wall of the throttle body 16 on its left end area; said throttle sensor 53 has an externally projecting connection area that protrudes past the valve shaft 22b of the throttle valve that detects the rotational angle of said valve shaft.

The throttle body's 16 valve shaft 22b on the right side end is connected to a drive pulley 25 by a linkage mechanism 24. The foregoing linkage mechanism 24 uses a link plate 34c to connect a valve-side arm 24a which is affixed to the valve shaft 22b on the foregoing left end, and a pulley-side arm 24b which is affixed to the pulley shaft (the throttle drive shaft) 25a. The drive pulley 25 is axially supported on the foregoing pulley shaft 25a that is attached to a flange 16b formed on the right end of the throttle body 16. Affixed to said pulley shaft 25a are a closed-side pulley 25b and an open-side pulley 25c; both pulleys 25b, 25c are linked to the throttle grip on the right side of the handlebars by means of throttle cables 26.

The angle assumed by the foregoing throttle plate 22a during idling (minimum aperture) is set by a stop 16d on the right end of the throttle body that regulates the angular position of the foregoing valve-side arm 24a. It is possible to make this stop 16d adjustable in order to regulate angular position. The angle during idling for the remaining three throttle bodies 16 can be adjusted by means of an opening adjustment mechanism 23 that connects to the externally protruding members of the various valve shafts 22b. This arrangement allows highly precise adjustments of the angle of the valve plates 22a during idling.

When the foregoing throttle valves 22 are in their fully open angular position, the opening angle is defined by the engagement of a stop 25d on the side surface of the open-side pulley 25c that comes into contact with a stop 21 a projecting from the foregoing connecting brackets 21. This design allows the driver to apply a strong force to fully open the throttle without that rotational force being transmitted to the link mechanism 24 and subsequently to the throttle valves 22.

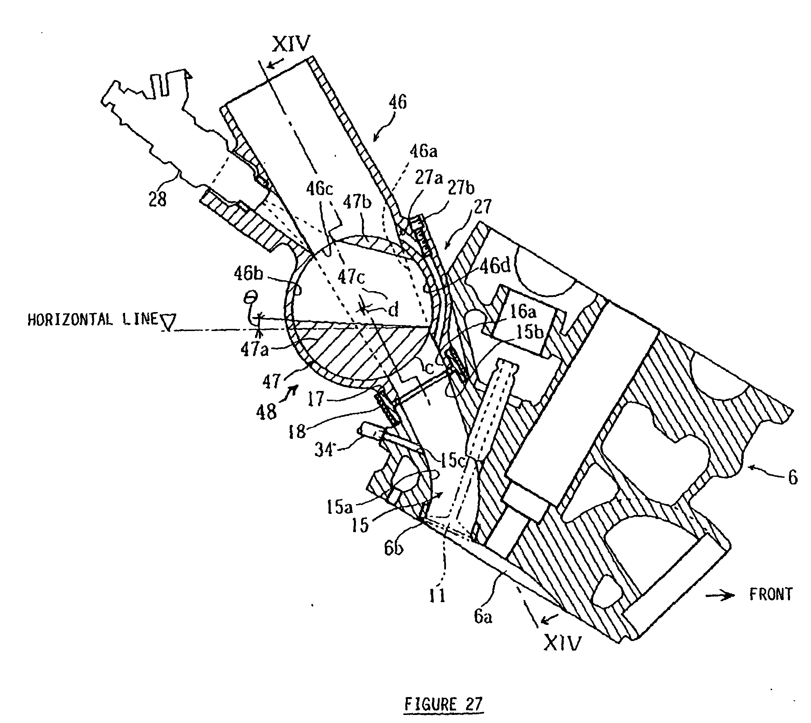

Each of the foregoing throttle bodies has an adjustment mechanism 27 (compare Figures 16,27). Said adjustment mechanism consists of an adjustment hole 27a formed in the ceiling of the throttle body 16 adjacent to the valve plate 22a when at its minimum aperture position, and an adjustment screw 27b which can be used to adjust the passage cross section of said adjustment hole 27a. This design allows manually adjusting the idle RPM, thereby avoiding any variation in the idling RPM among the various cylinders.

Further, a fuel injection valve 28 is mounted upstream of the throttle valve 22 in the ceiling of each of the foregoing throttle bodies 16. As is shown in Figure 16, the injection nozzle of each fuel injection valve directs fuel toward the bottommost position of the open line (the gap formed between the inside surface of the air intake passage and the edge of the valve plate 22a) that is formed when the valve plate 22a is in its minimum aperture position. Thus, when the throttle valve 22 is in the idling aperture position, pooling of injected fuel upstream of the valve plate 22a can be avoided.

Further, fuel does not pool in the idle adjustment hole 27a, since the foregoing idle adjustment hole 27a lies on the side opposite from the fuel injection position. It is further possible, as shown by the 2-dot dotted lines in Figure 15, to locate the foregoing fuel injection valve 28 on the back surface side of the throttle body. So doing can make the air intake system even more linear.

A fuel supply rail 29 is attached to the top of the foregoing fuel injection valves. The fuel supply rail 29 is long enough to span as far as the four fuel injection valves 28, and a fuel pressure regulator valve 30 is mounted on its left end. This fuel pressure regulator valve 30 is of the variable pressure type and is capable of regulating the pressure of the fuel supplied from the fuel pump to a controlled pressure level. This control pressure is based upon an average of the air intake negative pressure that is sampled through sampling holes 15c located downstream of the throttle valve in the air intake passage and passing through pressure conduction hoses 34, 32 which pass the pressure to the inside of the foregoing pressure regulating valve 30. The foregoing averaged air intake negative pressure is detected by an air intake negative pressure sensor 54.

When the throttle valves 22 are at their idling aperture (minimum aperture) the foregoing fuel pressure regulating valve 30 adjusts the fuel pressure downward by an amount which corresponds to the degree by which the foregoing control pressure (air intake negative pressure) is lower than the atmospheric pressure. This results in there being little pressure difference between the fuel pressure in the fuel supply rail 29 and the pressure at the fuel injection position (the approximate atmospheric pressure on the upstream side of the throttle body 16). As a result, the dynamic range of the fuel injection valves, that is, the ratio of the minimum injection amount to the maximum injection amount, is essentially broadened.

In the present embodiment, in mounting the foregoing throttle valves, the throttle plate positioning is such that the volume ratio ε is set based upon the valve overlap interval when both the foregoing air intake valves and exhaust valves are open, and on the leanest (lowest concentration) of air/fuel ratio (lean limit air/fuel ratio) that allows for stable idling.

What is meant by the foregoing volume ratio ε is the Q/V ratio of the port volume Q, defined as the volume of the foregoing air intake port to the foregoing air intake valve openings 6b, more precisely, the volume from the top surface of the air intake valves 11 when in their closed position, to the downstream side outside surface (downstream surface) of the valve plate 22a when in its minimum aperture position, for each cylinder, to the per cylinder displacement volume V, defined as the cross sectional area of the cylinder bore times the stroke length.

In this case, when the foregoing overlap interval is set on the basis of the required engine output, the foregoing ε is set to make it possible to run at the lean limit air/fuel ratio, which is leaner than the theoretical air/fuel ratio for that overlap interval. The ε is set by positioning the foregoing valve plate 22a based upon the stroke volume V per cylinder.

Specifically, the foregoing overlap interval can be set inside a crank angle range of 30 to 140°, and the foregoing volume ratio ε can be selected from a range from 0.15 to 0.45. In this case, the greater the overlap interval, the smaller the value of ε that should be selected. In this embodiment, the overlap interval is set at 50°, and the foregoing volume ratio ε is set at 0.25.

In order to set the foregoing volume ratio ε to be 0.25 in this embodiment, the throttle valves 22 were positioned so that the downstream surface of the valve plate 22a when in the idling aperture position fell within the projected surface of the engine in the cylindrical axis direction, in other words, the port volumes were minimised by locating them in close proximity to the air intake valve openings. In the present embodiment, the throttle valves 22 are of the conventional type, and the valve shaft 22b, which is a rotating shaft, approximately conformed to the downstream surface of the valve plates 22a.

In the present embodiment, 50 is an ECU that provides operational control over the engine 1. Said ECU 50 receives inputs from a cylinder discrimination sensor 51, crank angle sensor 52, throttle sensor 53, air intake negative pressure sensor 54, neutral switch sensor 55, engine temperature sensor 56, and a fuel pressure sensor 57. It provides output of the ignition timing signal to the ignition coil and a fuel injection signal to the fuel injection valves that are based upon the operating state of the engine.

Specifically, the foregoing ECU 50 uses the signals from the cylinder discrimination sensor 51 and the crank angle sensor 52 to compute the engine RPM, and the throttle aperture signal from the throttle sensor and the air intake negative pressure from the air intake negative pressure sensor 54 to determine the engine load. Then it determines the engine's operating state based upon the engine RPM and engine load, and, based upon that determination, adjusts the ignition timing and determines the amount and timing of the fuel injection.

Further, the rate of throttle aperture variation detected by the throttle sensor 53 is used by the ECU 50 to determine whether the engine is operating in an extreme state, for example, rapid acceleration, at which time extreme state corrections are added to the foregoing ignition timing, and the amount of and timing for the fuel injection. This design permits rapid acceleration without any delay in obtaining the required fuel supply.

In order to achieve the volume ratio ε in the engine 1 of this embodiment that is smaller than that of conventional engines, the throttle valve 22 has been positioned in closer proximity to the air intake valve openings 6; as a result, the amount of intake air precisely corresponds to the aperture of the throttle valve.

Furthermore, the engine 1 of this embodiment positions the fuel injection valves 28 on the upstream side of the throttle valves and directs their spray toward the wall surfaces of the air intake passages. In addition, in operating ranges where there is a wide throttle aperture, the injected fuel is directed to strike the valve plate 22b, which, compared to the conventional method where the fuel spray is directed at the underside of the intake valve umbrella structures, causes more fuel to adhere to the wall surfaces of the air intake passages, and the amount of this fuel adherence and the amount of it that evaporates vary predictably in a manner that depends on the operating temperature of the engine and other factors.

As a result, especially when the throttle valve 22 is opened quickly under no load conditions to cause no load engine racing (air blowout), the amount of air taken in increases rapidly in response to the aperture of the throttle valve, thereby delaying the fuel injection as compared to the amount of fuel injected during rapid acceleration. At such times the amount of fuel flowing through the intake passages into the combustion chambers could cause a problem. As a result, no load racing can cause a loss of fire during the initial stages of the throttle manipulation, as well as cause concerns over diminished driving feel.

This embodiment addresses said issue by making the determination, when an extreme operating state is detected, of whether that state is a load transitional state from the foregoing rapid acceleration, or whether it is a no load transitional operating state (no load engine racing), and it then makes different corrections based upon type of extreme operational state.

Specifically, the added amount of fuel injection is increased more in no load engine racing, and the timing of this volume-increase signal is hastened. In this case, the engine temperature sensor allows a determination to be made of whether the engine is in a warmed up state, and if the warm up has been delayed, a temperature correction is made that further increases the amount of fuel supply. This correction can be made in response to the amount of fuel adhering to the air intake passages since that amount and the amount which evaporates can be predicted based upon the engine temperature.

The adoption of the engine control method proposed in a previous patent application by these inventors makes it possible to avoid any problems during no load engine racing. The engine control method used in that proposal relied on a control-system procedural model based on the air/fuel ratio. The hypothetical air/fuel ratio obtained from that procedural model was used in feedback control where the ratio of said hypothetical air/fuel ratio to the target air/fuel ratio was used as the basis for computing the control parameters for the engine's air/fuel ratio by constructing a reverse model for the engine, to control the amount of variation that was applied to achieve the target air/fuel ratio appropriate to the operating state of the engine. The details of this engine control method are described in Japan Patent Application Hei 9-8925.

During the idling operations of the engine 1 of this embodiment, the valve plates 22a of the throttle valves 22 are held at their idling aperture. The resulting volume ratio ε in the idling operating state is 0.25. As stated above, the valve overlap is 50°. The lean limit air/fuel ratio for the engine 1 of this embodiment is approximately 15, a number that was confirmed by experimentation, and which is on the lean side of the theoretical air fuel ratio. Accordingly, it is possible for the engine 1 of this embodiment to idle stably at the theoretical air/fuel ratio.

When the valve overlap is high, the present inventors confirmed that the higher the foregoing volume ratio, the higher the auto-EGR rate, and the more difficult it is to achieve stable operations at the theoretical air/fuel ratio. What is meant by the "auto-EGR rate" is the percentage of already burned gases that flow backwards into the combustion chamber during the valve overlap interval.

Thus, even though the engine 1 of this embodiment has its foregoing volume ratio set to be lower than conventional engines at 0.25 and its overlap interval set high in order to achieve better engine output, it is still possible for it to have a lean limit air/fuel ratio that is on the lean side of the theoretical air/fuel ratio. Accordingly, this engine operates stably at the theoretical air/fuel ratio and provides improved engine output while maintaining efficient exhaust cleansing by the three-element catalyst.

Further, the fuel injection valves 28 are positioned on the upstream side of the throttle valves, 22, where it was easy to secure adequate space for the fuel injection valves 28b due to the moving of the throttle valves 22 to the close proximity of the air intake valve openings 6b in order to decrease the above described volume ratio. Incidentally, in the prior art, the location of the fuel injection valves on the downstream side of the throttle valves was a generally accepted premise, but if the foregoing volume ratio is to be lowered, it would be difficult to find enough space for locating these fuel injection valves in that manner.

The throttle valves 22 are of the two-shaft type, using a valve shaft 22b (rotating shaft) and a drive shaft 25a corresponding to the afore-mentioned pully shaft. Both shafts 22b, 25a are connected by a linkage mechanism 24, making it possible for the valve plates 22a to lie within the projected surface of the engine in the cylindrical axis direction, and moreover, for the throttle drive shaft 25a to lie outside that projected surface. This arrangement allows obtaining lower volume ratios than in the prior art and facilitates the emplacement of the rotational drive mechanism for the throttle valves 22.

A throttle sensor 53 is attached to the valve shaft 22b (rotating shaft) for the foregoing throttle valves 22 to detect the aperture of the throttle valves directly, thereby avoiding the error that would be introduced by a linkage mechanism if this aperture were detected indirectly. This method can increase accuracy of detection.

There is a stop 16d on the valve shaft 22b that holds the throttle valve 22 to its minimum aperture (idling aperture); this feature enables setting very accurately the important minimum aperture setting for the throttle valve's idling adjustment. There is another stop located on the throttle drive shaft 25a, which prevents excessive force from being transmitted to the valve shaft 22b of the throttle valves 22 even when the operator applies a strong force to open the throttle. This structure eliminates the possibility of any resulting distortion of the throttle valves' apertures.

In addition, in cases where a side-cam chain dynamic valve apparatus is used, the throttle sensor 53 can be mounted on the side opposite the cam chain and the throttle drive shaft 25a can be mounted on the cam chain side of the engine, thereby balancing, left and right, the various parts such as the throttle sensor 53. This structure allows for the highly accurate detection of the throttle aperture, and secures adequate space for their placement.

Since the fuel pressure regulator valve regulates the pressure based upon control pressure values obtained by sampling downstream of the throttle valve 22, it is possible to achieve a broad dynamic range. To wit, the smaller the throttle aperture, where less fuel supply is required, the higher the magnitude of the negative pressure that comprises the foregoing control pressure and that causes the fuel pressure to the fuel injection valves to drop. On the other hand, since the fuel injection valves 28 are located on the upstream side of the throttle valves, the pressure at the nozzles of the fuel injection valves is approximately at the atmospheric pressure level at low throttle apertures, and accordingly, the difference between the fuel pressure and the pressure at the injection nozzle decreases. This design results in a broadening of the dynamic range.

Since the injected fuel from the fuel injection valves 28 that lie upstream of the throttle valves 22 is directed toward the bottommost part of the open line formed by the valve plate 22a at their minimum aperture position, the fuel does not pool inside the air intake passages, even when the throttle is at its minimum aperture. This feature assures stable combustion in the idling operating range.

The installation of an idle air adjustment mechanism 27 in the ceilings of the air intake passage prevents the fuel injected by the foregoing fuel injection valves 28 from invading the idle air adjustment hole 27a, thereby contributing to increased idle stability.

Further still, since the fuel sprayed from the foregoing fuel injection valves collides with the valve plates 22a when in their fully open position, and since that collision position is near the center of the air intake passages where the air flow speed is high, the injected fuel mixes well with the air.

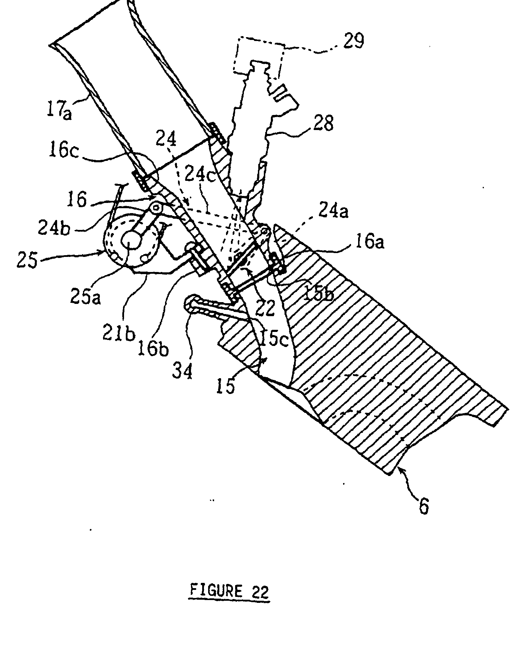

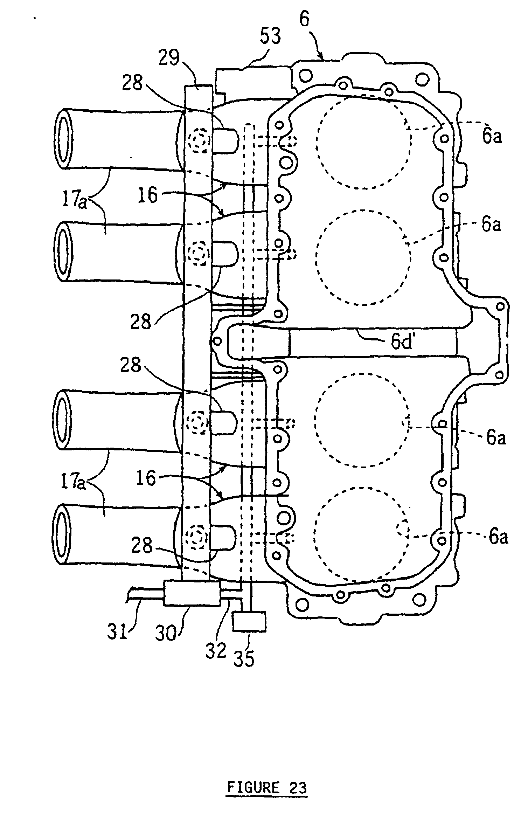

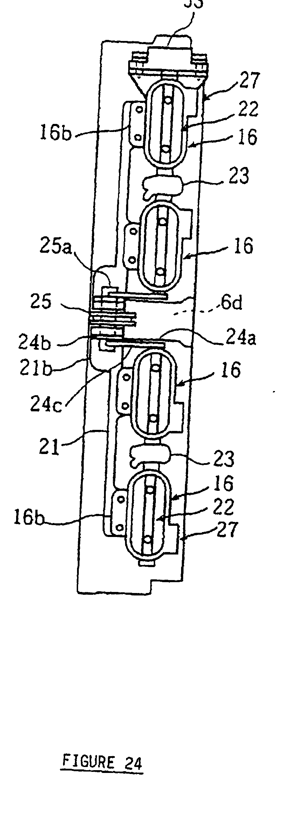

Figures 22 and 23 show a second embodiment equipped with a canter-chain dynamic valve apparatus. In the Figures, the same reference number have been used for parts that correspond to those shown in Figures 15 through 21. Those corresponding reference numbers are also used for the same or similar parts shown in Figures 24 through 30 below.

In the Figures, a chain chamber 6d' is formed in the transverse center of the engine where the cam drive chain is housed. The throttle drive shaft 25a and the valve shaft 22b run in parallel just off the rear side of the chain chamber 6d'. The left and right ends of said drive shaft 25a are linked by pulley-side arm 24b, link plate 24c, and valve arm 24a to the valve shaft 22b of the throttle valve 22 to the left and right of center.

In this embodiment, which uses the center chain method, the foregoing throttle drive shaft 25a is positioned at the transverse center of the engine, causing the operating force from said throttle drive shaft 25a to be equally divided between the left and right throttle valves. Compared to the case where the four throttle valves are arrayed in a straight line and driven from one end, it is possible to better assure their reliable synchronised operation.

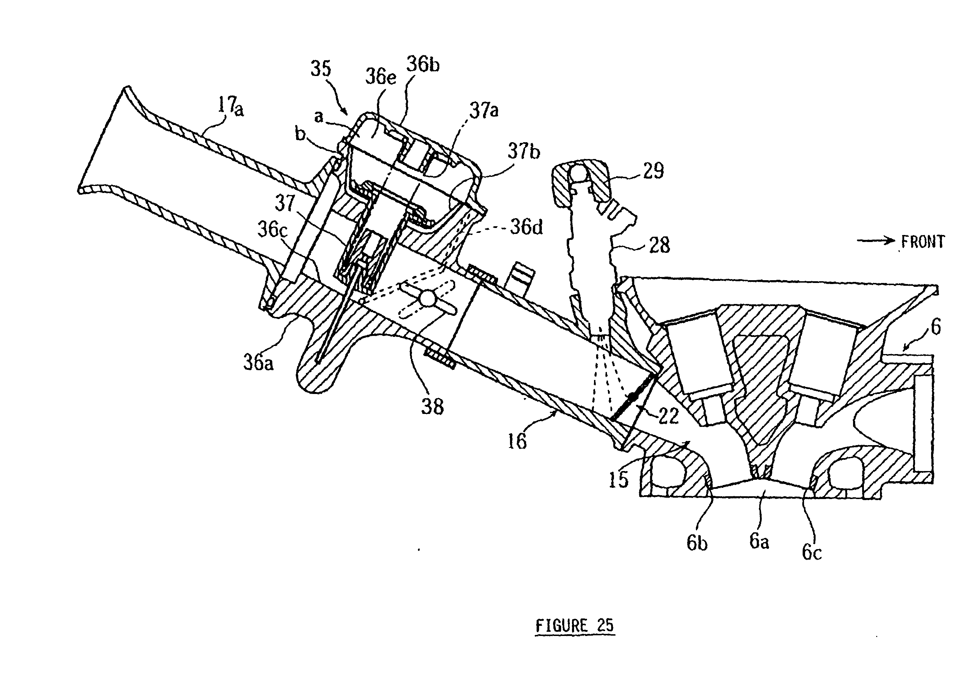

Figure 25 shows a third embodiment. In this third embodiment, automatically variable venturi type damping valves 35 have been mounted midway in the air intake passages to dampen the rapid change in the air intake volume when the throttle valve 22 is rapidly opened.

The foregoing damping valves 25 comprise a piston 37 that is slidably inserted into a venturi passage 36c formed in the valve body 36a that varies the cross section of the passage, wherein the upper end of said piston 37 is positioned inside a working chamber 36e that is formed by the top of the foregoing valve body 36a and the cover 36b. Said working chamber is divided by a diaphragm 37b into a negative pressure chamber a and an atmospheric pressure chamber b. Venturi pressure passes between the foregoing venturi passage 36c and the piston 37 and is introduced into the foregoing negative pressure chamber a. 37a is a spring that biases the piston 37 toward the minimum aperture side.

Further, a flow-regulating blade has been mounted downstream from said piston 37. It can be attached at an angle that matches the axial line of the air intake passage (see the solid line in Figure 25), or it can be such that its angle is manually adjustable. It would further be possible to change this angle by linking it to the aperture of the throttle valve 22. In this case, if a throttle valve 22 were at its minimum aperture, the blade would be at the angle shown by the double-dot line in the figure, and when fully opened, it would be at the angle shown by the solid line.

In this embodiment, when a throttle valve is rapidly opened, the air flow passing the lower edge of the piston 37 would increase with the increasing inflow, and generate an increased negative pressure. This negative pressure would cause the diaphragm 37b to draw the piston 37 upward. Thus, the increased speed of the air flow accompanying the rapid opening of the throttle valves is damped as a means of preventing loss of fire and avoiding a diminished drive feel.

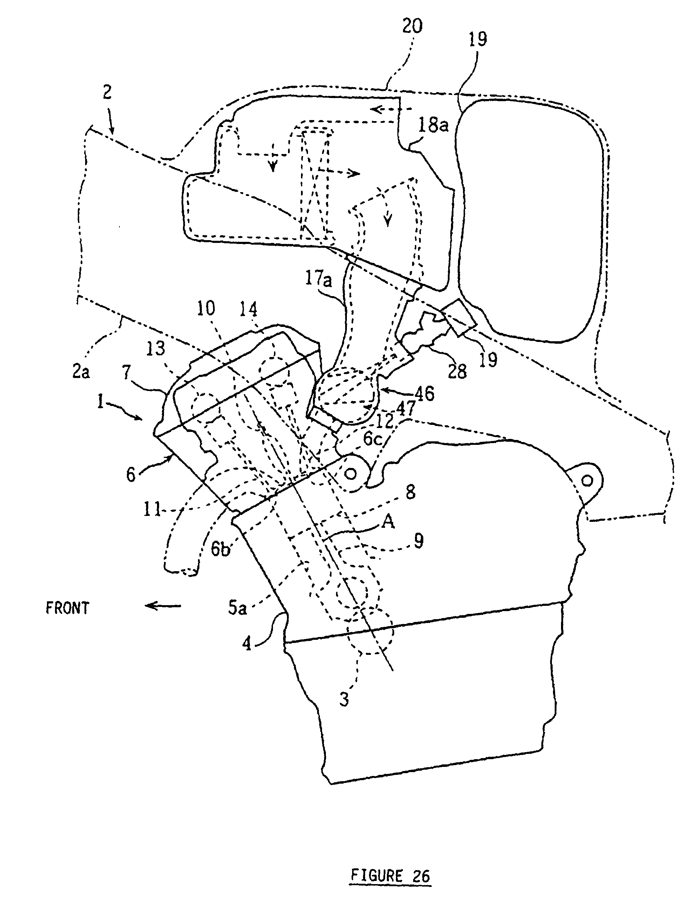

Figures 26 through 30 show a fourth embodiment where the foregoing butterfly type throttle valves have been replaced by rotary type throttle valves.

In the Figures, 48 is a rotary type throttle valve. Said throttle valve 48 comprises a throttle body 46 with a hole 46c bored through that has an axial line d (axis of rotation) that runs parallel to the camshafts. A valve body 47 consisting of a round rod is rotatably disposed inside said valve hole 46c. Formed in said valve body 46 is a passage opening 47c comprising an inner topology that aligns with the topology of the air intake passage.

The foregoing valve body can assume a fully open position in which the bottom 47a and ceiling 47b of the foregoing passage opening 47c have surfaces that align with the inner surfaces of the air intake passage 46a that consist of the bottom concave area 46b of the concave area in the ceiling and the inner surface of the passage opening 47c that is buried in the ceiling 46d. It can also assume a fully closed, minimum aperture position wherein the foregoing bottom area 47a protrudes into the air intake passage 46. The amount of aperture varies according to the manipulation of the accelerator grip by the rider.

Here, when the valve body 47 is rotated into its minimum aperture position, the inside surface of the foregoing bottom area 47a (air intake passage constituent surface) is tilted forward to the angle e with respect to the horizontal line when the engine is mounted. Then, fuel that is injected from a fuel injection valve 28 sprays against the bottommost position of the open line of the valve body when it is in its minimum aperture position. This feature makes it possible to prevent the fuel from pooling in the foregoing bottom area 47a, even in cases when the fuel is injected while the valve body 47 is in its minimum aperture position.

Also, with regard to the present embodiment, the downstream surface c along the downstream edge of the valve body 47 when at its minimum aperture position in the air intake passage 46a, is positioned within the projected surface of the engine in its cylindrical axial direction. This design makes it possible to greatly reduce the foregoing volume ratio compared with conventional engines, allowing a setting in the neighborhood of 0.25. This feature results, as in the foregoing embodiments, in stabilized combustion in the idling operating range.

On the other hand, the axis of rotation of each throttle valve (the axial line *d* for the valve body 47) lies outside the foregoing projected surface in the cylindrical axis direction, and the throttle drive shaft 25a and the throttle axis of rotation d are coaxial. This arrangement allows the positioning of the throttle valves closer to the air intake openings without interference from the throttle valve drive mechanism.

Normally, during operation in the idling range, since the air intake volume is low, the flow of air into the cylinders tends to slow, and it is difficult to achieve good combustion. The present embodiment addresses this issue by diverting the air intake flow by the bottom 47a of the valve body 47 to flow along the ceiling wall surface so as to flow into the cylinders in their axial direction and to generate a vertical tumbling action therein that results in good combustion.

## Claims

1. Four-cycle engine comprising air intake and exhaust passages that connect to each combustion chamber, air intake valves (21) and exhaust valves (22) that open and dose the air intake opening (15b) and exhaust opening (15c) into a combustion chamber, and a throttle valve (5) located inside the air intake passage (3),
**characterized in that**
the port volume (Q) per cylinder, defined as the volume from the top surface of the umbrella area of the at least one intake valve (21) in the air intake valves opening (15b) of the at least one air intake port (15d) per cylinder to the outside surface area of a bottom area (27c) of the throttle valve (5) in its fully closed position, is determined by a position of the throttle valve (5) inside the air intake passage (3) such that the volume ratio (ε), which is the ratio of the port volume (Q) to the stroke volume (V), is set on the basis of the overlap interval (O/L when the air intake valve (21) and exhaust valve (22) are opened to provide stable engine idling and that the volume ratio (ε) ranges from 0.25 to 0.45.

2. Four-cycle engine as defined in claim 1, **characterized in that** the throttle valve (5) is located such that the volume ratio (ε) can be set on the basis of the overlap interval (O/L) to allow the lowest possible air/fuel ratio that still allows stable engine idling.

3. Four-cycle engine according to claim 1 or 2, **characterized in that** the overlap interval (O/L) is a crank angle in a range from 30° to 140°.

4. Four-cycle engine according to any of the preceding claims, **characterized by** a variable port volume apparatus (33) for varying the volume ratio (ε) on the basis of the operating state of the engine.

5. Four-cycle engine according to any of the preceding claims, **characterized by** a variable valve timing apparatus for varying the overlap interval on the basis of the operating state of the engine.

6. Four-cycle engine according to any of the preceding claims, **characterized in that** at least one fuel injection valve (28) is located in the air intake passage (3) on the upstream side of the throttle valve (31).

7. Four-cycle engine according to any of the preceding claims, **characterized in that** the throttle valve (31) is positioned in a manner such that the majority of the downstream surface of the throttle valve (31), when in its minimum aperture position inside an air intake passage, lies within the engine's projected surface in the cylindrical axial direction.

8. Four-cycle engine according to any of the preceding claims, **characterized in that** the throttle valve (22) comprises a valve rotating shaft (22b) which is connected to a drive shaft (25a) by means of a linkage apparatus (24) and that the valve rotating shaft (22b) of the throttle valve (22) is positioned to approximately conform to the downstream surface of the throttle valve (22) and that the throttle drive shaft (25a) runs parallel to the throttle valve rotating shaft (22) and that the valve rotating shaft (22b) and the throttle drive shaft (25a) are spaced in-between.

9. Four-cycle engine according to any of the preceding claims, **characterized in that** the downstream surface is positioned apart from and downstream of the throttle valve rotating shaft (22b) and wherein the throttle drive shaft (25a) is positioned along the same straight line as the throttle valve rotating shaft (22b).

10. Four-cycle engine according to any of the preceding claims, **characterized in that** a throttle aperture sensor (53) is mounted on the throttle valve rotating shaft (22b) to detect the aperture of said throttle valve (22), and wherein stops are positioned on said rotating shaft (22b) for the minimum throttle valve aperture and for the maximum throttle valve aperture, respectively.

11. Four-cycle engine according to any of the preceding claims, **characterized by** being equipped with a dynamic valve apparatus having a side cam chain, wherein a camshaft drive chain is positioned on one side of the engine with respect to the axial direction of the camshaft, and wherein the throttle aperture sensor (53) is mounted on the side opposite the cam chain side, and the throttle drive shaft is mounted on the cam chain side.

12. Four-cycle engine according to any of the preceding claims, **characterized by** a center chain type dynamic valve apparatus wherein a chain to drive the camshafts (13, 14) is positioned between the cylinders, and wherein the throttle drive shaft is located in the same area as the camshaft drive chain.

13. Four-cycle engine according to any of the preceding claims, **characterized in that** an idle air adjustment passage is formed in the ceiling (47b) of each air intake passage (46a) to bypass the foregoing throttle valve (48), wherein said idle air adjustment passage is threaded for a screw adjustment (27b) that changes the cross section of the idle air adjustment passage (Fig. 27).

14. Four-cycle engine according to any of the preceding claims, **characterized in that** the fuel injection valves (28) are positioned so that the fuel sprayed from each fuel injection valve (28) strikes the throttle valve (22) when the throttle is fully open (Fig. 16, 17).

15. Four-cycle engine according to any of the preceding claims, **characterized in that** the throttle body (46) which houses the throttle valve (48) and the injector body which holds the fuel injection valve (28) are an integral unit (Fig. 27).

## Patentansprüche

1. Viertaktmotor, der Lufteinlass- und Auslasskanäle, die mit jeder Brennkammer verbunden sind, Lufteinlassventile (21) und Auslassventile (22), die die Luftansaugöffnung (15b) und die Auslassöffnung (15c) in eine Brennkammer hinein öffnen und schließen, sowie eine Drosselklappe (5) umfasst, die sich im Inneren des Luftansaugkanals (3) befindet,
**dadurch gekennzeichnet, dass**:
das Kanalvolumen (Q) pro Zylinder, das als das Volumen von der Oberseite des Schirmbereiches des wenigstens einen Einlassventils (21) in der Lufteinlassventilöffnung (15b) des wenigstens einen Lufteinlasskanals (15d) pro Zylinder zu dem Außenflächenbereich eines unteren Bereiches (27c) der Drosselklappe (5) in ihrer vollständig geschlossenen Position definiert ist, durch eine Position der Drosselklappe (5) im Inneren des Luft-Einlasskanals (3) so bestimmt ist, dass das Volumenverhältnis (ε), das das Verhältnis von Kanalvolumen (Q) zu Pumpvolumen (V) ist, auf der Basis des Überlappungsintervalls (O/L) festgelegt ist, wenn das Lufteinlassventil (21) und das Auslassventil (22) geöffnet sind, um stabilen Motor-Leerlauf zu gewährleisten, und dass das Volumenverhältnis (ε) von 0,25 bis 0,45 reicht.

2. Viertaktmotor nach Anspruch 1, **dadurch gekennzeichnet, dass** die Drosselklappe (5) so angeordnet ist, dass das Volumenverhältnis (ε) auf der Basis des Überlappungsintervalls (O/L) festgelegt sein kann, um das niedrigstmögliche Luft-/Kraftstoff-Verhältnis zuzulassen, das noch stabilen Motor-Leerlauf ermöglicht.

3. Viertaktmotor nach Anspruch 1 oder 2, **dadurch gekennzeichnet, dass** das Überlappungsintervall (O/L) ein Kurbelwinkel in einem Bereich von 30° bis 140° ist.

4. Viertaktmotor nach einem der vorangehenden Ansprüche, **gekennzeichnet durch** eine Vorrichtung (33) für veränderliches Kanalvolumen, die das Volumenverhältnis (ε) auf der Basis des Betriebszustandes des Motors ändert.

5. Viertaktmotor nach einem der vorangehenden Ansprüche, **gekennzeichnet durch** eine Vorrichtung für veränderliche Ventilsteuerung, die das Überlappungsintervall auf der Basis des Betriebszustandes des Motors ändert.

6. Viertaktmotor nach einem der vorangehenden Ansprüche, **dadurch gekennzeichnet, dass** sich wenigstens ein Kraftstoffeinspritzventil (28) in dem Lufteinlasskanal (3) an der stromauf liegenden Seite der Drosselklappe (31) befindet.

7. Viertaktmotor nach einem der vorangehenden Ansprüche, **dadurch gekennzeichnet, dass** die Drosselklappe (31) so angeordnet ist, das sich der Großteil der stromab liegenden Fläche der Drosselklappe (31), wenn sie ihre minimale Öffnungsposition im Inneren eines Lufteinlasskanals einnimmt, innerhalb der Projektionsfläche des Motors in der zylindrischen Axialrichtung liegt.

8. Viertaktmotor nach einem der vorangehenden Ansprüche, **dadurch gekennzeichnet, dass** die Drosselklappe (22) eine Klappen-Drehwelle (22b) umfasst, die mit einer Antriebswelle (25a) mittels einer Verbindungsvorrichtung (24) verbunden ist, und dass die Klappen-Drehwelle (22b) der Drosselklappe (22) so angeordnet ist, dass sie annähernd der stromab liegenden Fläche der Drosselklappe (22) entspricht und dass die Drossel-Antriebswelle (25a) parallel zu der Drosselklappen-Drehwelle (22) läuft und dass die Klappen-Drehwelle (22b) sowie die Drossel-Antriebswelle (25a) dazwischen beabstandet sind.

9. Viertaktmotor nach einem der vorangehenden Ansprüche, **dadurch gekennzeichnet, dass** die stromab liegende Fläche von der Drosselklappen-Drehwelle (22b) getrennt und stromab von ihr angeordnet ist, und wobei die Drossel-Antriebswelle (25a) auf der gleichen geraden Linie wie die Drosselklappen-Drehwelle (22b) angeordnet ist.

10. Viertaktmotor nach einem der vorangehenden Ansprüche, **dadurch gekennzeichnet, dass** ein Drosselöffnungs-Sensor (53) an der Drosselklappen-Drehwelle (22b) angebracht ist, um die Öffnung der Drosselklappe (22) zu erfassen, und wobei Anschläge an der Drehwelle (22b) für die minimale Drosselklappenöffnung bzw. die maximale Drosselklappenöffnung angeordnet sind.

11. Viertaktmotor nach einem der vorangehenden Ansprüche, **dadurch gekennzeichnet, dass** er mit einer dynamischen Ventilvorrichtung mit einer seitlichen Steuerkette versehen ist, wobei eine Nockenwellen-Antriebskette an einer Seite des Motors in Bezug auf die axiale Richtung der Nockenwelle angeordnet ist und wobei der Drosselöffnungs-Sensor (53) an der der Steuerkette gegenüberliegenden Seite angebracht ist und die Drossel-Antriebswelle an der Steuerkettenseite angebracht ist.

12. Viertaktmotor nach einem der vorangehenden Ansprüche, **gekennzeichnet durch** eine dynamische Ventilvorrichtung mit mittlerer Steuerkette, wobei eine Kette zum Antreiben der Nockenwellen (13, 14) zwischen den Zylindern angeordnet ist und wobei die Drossel-Antriebswelle sich in dem gleichen Bereich befindet wie die Nockenwellen-Antriebskette.

13. Viertaktmotor nach einem der vorangehenden Ansprüche, **dadurch gekennzeichnet, dass** ein Leerlaufluft-Regulierkanal in der Decke (47b) jedes Lufteinlasskanals (46a) ausgebildet ist, um die vorangehende Drosselklappe (48) zu umgehen, wobei der Leerlaufluft-Regulierkanal mit Gewinde für eine Schraub-Einstelleinrichtung (27b) versehen ist, die den Querschnitt des Leerlaufluft-Regulierkanals (Fig. 27) verändert.

14. Viertaktmotor nach einem der vorangehenden Ansprüche, **dadurch gekennzeichnet, dass** die Kraftstoffeinspritzventile (28) so angeordnet sind, dass der über jedes Kraftstoffeinspritzventil (28) gesprühte Kraftstoff auf die Drosselklappe (22) auftrifft, wenn die Drosselklappe vollständig offen ist (Fig. 16, 17).

15. Viertaktmotor nach einem der vorangehenden Ansprüche, **dadurch gekennzeichnet, dass** das Drosselklappengehäuse (46), das die Drosselklappe (48) aufnimmt, und das Einspritzventilgehäuse, das das Kraftstoffeinspritzventil (28) hält, eine integrale Einheit (Fig. 27) bilden.

## Revendications

1. Moteur à quatre temps comprenant des passages d'admission d'air et des passages d'échappement qui sont en connexion avec chaque chambre de combustion, des soupapes d'admission d'air (21) et des soupapes d'échappement (22) qui ouvrent et ferment l'ouverture d'admission d'air (15b) et l'ouverture d'échappement (15c) situées à l'intérieur d'une chambre de combustion, et un papillon des gaz (5) situé à l'intérieur du passage d'admission d'air (3),
**caractérisé en ce que**,
le volume d'orifice (Q) par cylindre, défini en tant que volume entre la surface supérieure de la zone en cloche de la au moins une soupape d'admission (21) dans l'ouverture des soupapes d'admission d'air (15b) du au moins un orifice d'admission d'air (15d) par cylindre, et la surface externe d'une zone d'embase (27c) du papillon des gaz (5) dans sa position de fermeture totale, est déterminée par une position du papillon des gaz (5) à l'intérieur du passage d'admission d'air (3), de sorte que le rapport volumétrique (ε), qui est le rapport entre le volume d'orifice (Q) et le volume de course (V), est réglé sur la base d'un intervalle de recouvrement (O / L) lorsque la soupape d'admission d'air (21) et la soupape d'échappement (22) sont ouvertes afin de fournir un ralenti stable au moteur et que le rapport volumétrique (ε) se situe dans une plage entre 0,25 et 0,45.

2. Moteur à quatre temps selon la revendication 1, **caractérisé en ce que** le papillon des gaz (5) est situé de telle sorte que le rapport volumétrique (ε) peut être réglé sur la base de l'intervalle de recouvrement (O / L) afin de permettre le rapport air / carburant le plus bas possible, ce qui de plus permet un ralenti stable du moteur.

3. Moteur à quatre temps selon la revendication 1 ou la revendication 2, **caractérisé en ce que** l'intervalle de recouvrement (O / L) est un angle de calage de manivelle situé dans une plage entre 30° et 140°.

4. Moteur à quatre temps selon l'une quelconque des revendications précédentes, **caractérisé par** un dispositif à volume d'orifice variable (33) destiné à modifier le rapport volumétrique (ε) sur la base de la condition de fonctionnement du moteur.

5. Moteur à quatre temps selon l'une quelconque des revendications précédentes, **caractérisé par** un dispositif de calage de soupape variable destiné à modifier l'intervalle de recouvrement sur la base de la condition de fonctionnement du moteur.

6. Moteur à quatre temps selon l'une quelconque des revendications précédentes, **caractérisé en ce que** au moins un clapet d'injection de carburant (28) est disposé dans le passage d'admission d'air (3) du côté amont du papillon des gaz (31).

7. Moteur à quatre temps selon l'une quelconque des revendications précédentes, **caractérisé en ce que** le papillon des gaz (31) est positionné d'une manière telle que la plus grande partie de la surface aval du papillon des gaz (31), lorsqu'il est dans sa position d'ouverture minimale à l'intérieur d'un passage d'admission d'air, repose à l'intérieur de la surface en saillie du moteur dans la direction axiale du cylindre.

8. Moteur à quatre temps selon l'une quelconque des revendications précédentes, **caractérisé en ce que** le papillon des gaz (22) comprend un axe rotatif de papillon des gaz (22b) qui est connecté à un arbre d'entraînement (25a) au moyen d'un dispositif de connexion (24) et **en ce que** l'axe rotatif de papillon des gaz (22b) du papillon des gaz (22) est positionné de manière à s'adapter approximativement à la surface aval du papillon des gaz (22) et **en ce que** l'arbre d'entraînement du papillon des gaz (25a) fonctionne de manière parallèle à l'axe rotatif de papillon des gaz (22b) et **en ce que** l'axe rotatif de papillon des gaz (22b) et l'arbre d'entraînement de papillon des gaz (25a) sont espacés l'un de l'autre.

9. Moteur à quatre temps selon l'une quelconque des revendications précédentes, **caractérisé en ce que** la surface aval est positionnée séparément et en aval de l'axe rotatif de papillon des gaz (22b) et dans lequel l'arbre d'entraînement de papillon des gaz (25a) est positionné le long de la même ligne rectiligne que l'axe rotatif de papillon des gaz (22b).

10. Moteur à quatre temps selon l'une quelconque des revendications précédentes, **caractérisé en ce qu'**un capteur d'ouverture de papillon des gaz (53) est monté sur l'axe rotatif de papillon des gaz (22b) afin de détecter l'ouverture dudit papillon des gaz (22), et dans lequel des butées sont positionnées sur ledit axe rotatif (22b) respectivement pour l'ouverture minimale du papillon des gaz et pour l'ouverture maximale du papillon des gaz.

11. Moteur à quatre temps selon l'une quelconque des revendications précédentes, **caractérisé par le fait qu'**il comprend un dispositif dynamique de soupape comportant une chaîne latérale de came, dans lequel une chaîne d'entraînement d'arbre à cames est positionnée sur un côté du moteur par rapport à la direction axiale de l'arbre à cames, et dans lequel le capteur d'ouverture de papillon des gaz (53) est monté sur le côté opposé au côté de la chaîne de cames, et l'arbre d'entraînement de papillon des gaz est monté du côté de la chaîne de cames.

12. Moteur à quatre temps selon l'une quelconque des revendications précédentes, **caractérisé par** un dispositif dynamique de soupapes de type à chaîne centrale dans lequel une chaîne destinée à entraîner les arbres à cames (13, 14) est positionnée entre les cylindres, et dans lequel l'arbre d'entraînement de papillon des gaz est disposé dans la même zone que la chaîne d'entraînement d'arbre à cames.

13. Moteur à quatre temps selon l'une quelconque des revendications précédentes, **caractérisé en ce qu'**un passage de réglage d'air de ralenti est formé dans le haut (47b) de chaque passage d'admission d'air (46a) afin de dériver le papillon des gaz (48) qui précède, dans lequel ledit passage de réglage d'air de ralenti est fileté afin d'être réglé par une vis (27b), ce qui modifie la coupe transversale du passage de réglage d'air de ralenti (figure 27).

14. Moteur à quatre temps selon l'une quelconque des revendications précédentes, **caractérisé en ce que** les clapets d'injection de carburant (28) sont positionnés de telle sorte que le carburant pulvérisé à partir de chaque clapet d'injection de carburant (28) heurte le papillon des gaz (22) lorsque le papillon des gaz est totalement ouvert (figures 16, 17).

15. Moteur à quatre temps selon l'une quelconque des revendications précédentes, **caractérisé en ce que** le corps de papillon des gaz (46), qui reçoit le papillon des gaz (48) et le corps d'injecteur qui maintient le clapet d'injection de carburant (28) sont formés en un seul bloc (figure 27).
